(19) Europäisches Patentamt
European Patent Office
Office européen des brevets

(11) **EP 3 157 712 B1**

(12) **EUROPÄISCHE PATENTSCHRIFT**

(45) Veröffentlichungstag und Bekanntmachung des Hinweises auf die Patenterteilung:
**11.08.2021** **Patentblatt 2021/32**

(21) Anmeldenummer: **15731024.4**

(22) Anmeldetag: **18.06.2015**

(51) Int Cl.:
***B25F 5/00*** *(2006.01)*

(86) Internationale Anmeldenummer:
**PCT/EP2015/063706**

(87) Internationale Veröffentlichungsnummer:
**WO 2015/193431 (23.12.2015 Gazette 2015/51)**

(54) **VERFAHREN ZUM STEUERN EINES ELEKTROMOTORS EINES ELEKTROWERKZEUGES**

METHOD FOR CONTROLLING AN ELECTRIC MOTOR OF A POWER TOOL

PROCÉDÉ POUR COMMANDER UN MOTEUR ÉLECTRIQUE D'UN OUTIL ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2014 DE 102014211894**
**17.06.2015 DE 102015211119**

(43) Veröffentlichungstag der Anmeldung:
**26.04.2017 Patentblatt 2017/17**

(60) Teilanmeldung:
**21181782.0**

(73) Patentinhaber: **Robert Bosch GmbH**
**70442 Stuttgart (DE)**

(72) Erfinder:
• **LEONG, Chi Hoe**
**Bayan Lepas**
**Penang 11960 (MY)**
• **TAN, Kah Hooi**
**Seberang Perai Utara**
**Pulau Pinang 13200 (MY)**
• **YEOH, Sim Teik**
**Gelugor Penang 11700 (MY)**
• **STIEFEL, Moritz**
**72631 Aichtal (DE)**
• **TAN, Ju-Lien**
**Gelugor Penang 11700 (MY)**

(56) Entgegenhaltungen:
**EP-A1- 2 599 589       EP-A2- 1 136 188**
**EP-A2- 1 695 794       WO-A1-2011/122361**
**WO-A1-2013/012098      WO-A2-2011/013853**

• **None**

**Beschreibung**

Die Erfindung betrifft ein Verfahren zum Steuern eines Elektromotors eines Elektrowerkzeuges gemäß Patentanspruch 1.

Stand der Technik

Aus dem Stand der Technik ist es bekannt, abhängig von einer Betätigung eines Schalters einen Elektromotor eines Elektrowerkzeuges zu steuern. Dabei wird der Elektromotor beispielsweise mit einer vorgegebenen Drehzahl oder mit einem vorgegebenen Drehmoment angesteuert. Ferner sind Steuerverfahren für Drehschlagschrauber z. B. aus EP 2 599 589 A1 und WO 2011/122361 A1 bekannt.

Die Aufgabe der Erfindung besteht darin, ein verbessertes Verfahren zum Steuern des Elektromotors bereitzustellen.

Offenbarung der Erfindung

Die Aufgabe der Erfindung wird durch das Verfahren gemäß Patentanspruch 1 gelöst.

In einer Ausführungsform wird der Elektromotor für eine festgelegte Antriebszeit während eines Schlagbetriebs des Elektrowerkzeuges betrieben und nach der Antriebszeit wird wenigstens ein Drehmoment des Elektromotors oder eine Drehzahl des Elektromotors reduziert. Es kann eine Kupplung verwendet werden, um das Drehmoment am Antrieb zu reduzieren oder der Elektromotor wird abgeschaltet. Beispielsweise wird die elektrische Spannung, mit der der Elektromotor versorgt wird, entsprechend reduziert.

In einer Ausführung kann abhängig von dem erfassten Parameter ein Drehmoment und/oder eine Drehzahl festgelegt werden, mit dem der Elektromotor während des Schlagbetriebes angetrieben wird. Dadurch wird ein verbesserter Einsatz des Elektrowerkzeuges erreicht.

Vorzugsweise wird als Parameter eine Standardabweichung des Stromes des Elektromotors und/oder der Drehzahl des Elektromotors während eines Schlagbetriebes des Elektrowerkzeuges erfasst.

In einer Ausführungsform wird eine Berechnungsmethode und/oder eine Tabelle und/oder eine Kennlinie verwendet werden, um abhängig von dem Parameter die Ansteuerzeit und/oder das Drehmoment und/oder die Drehzahl für die Ansteuerung des Elektromotors festzulegen.

In einer weiteren Ausführungsform wird der Elektromotor mit einer Batterie mit Strom versorgt, wobei eine Spannung der Batterie ermittelt wird, wobei der Parameter mit der ermittelten Batteriespannung bewertet wird, insbesondere wenn die Batteriespannung unter einem Grenzwert liegt. Dadurch kann ein Absinken der Spannung der Batterie durch die Bewertung des Parameters ausgeglichen werden.

In einer weiteren Ausführungsform werden die Batteriespannung und die Antriebszeit abhängig von der gemessenen Batteriespannung korrigiert. In einer weiteren Ausführungsform wird die Batteriespannung erfasst, mit einem Referenzwert verglichen und die Antriebszeit wird abhängig von einem Verhältnis der gemessenen Batteriespannung zum Referenzwert korrigiert. Auf diese Weise wird die Größe der Ansteuerung des Elektromotors bei einer veränderlichen Batteriespannung ausgeglichen. Dadurch wird das Antreiben des Elektromotors weiter präzisiert.

In einer weiteren Ausführungsform wird ein Hinweis an eine Bedienperson ausgegeben, wenn eine gemessene Batteriespannung eine vorgegebene Grenze unterschreitet. Auf diese Weise wird sichergestellt, dass die Bedienperson auf die geringe Batteriespannung und die damit verbundene geringe Antriebsleistung des Elektrowerkzeuges hingewiesen wird. Zudem kann der Hinweis die Information enthalten, dass eine vorgegebene Antriebszeit aufgrund der geringen Batteriespannung angepasst werden sollte. Bei Vorgabe der Antriebszeit durch die Bedienperson hat die Bedienperson aufgrund des Hinweises die Möglichkeit, die Antriebszeit anzupassen, falls sich die Batteriespannung zu stark ändert bzw. unter eine vorgegebene Grenze sinkt.

In einer weiteren Ausführungsform wird die Antriebszeit für einen Schlagbetrieb von einer Bedienperson eingegeben. Die Antriebszeit wird abgespeichert und von der Steuerschaltung beim Ansteuern des Elektromotors berücksichtigt. Diese Ausführungsform bietet den Vorteil, dass die Antriebszeit nicht automatisch ermittelt werden muss, sondern dass auf einfache Weise die Bedienperson die Antriebszeit festlegen kann. Die Antriebszeit bezeichnet eine Zeit, die eine Schraube in ein Werkstück während eines Schlagbetriebes eingeschraubt wird, bevor das Drehmoment des Elektromotors reduziert wird, eine Kupplung geöffnet wird oder der Elektromotor vollständig abgeschaltet wird. Auf diese Weise kann eine Beschädigung des Werkzeuges, insbesondere der Schraube vermieden werden. Zudem kann das Werkstück durch Vermeidung eines zu tiefen Eindrehens der Schraube vor Beschädigungen geschützt werden. Insbesondere kann eine Befestigung der Schraube im Werkstück verbessert werden, indem ein Durchdrehen des Gewindes der Schraube im Werkstück durch Festlegung der Antriebszeit während des Schlagbetriebes vermieden wird.

In einer weiteren Ausführungsform wird der Elektromotor gestoppt, wenn ein vorgegebenes Drehmoment beim Herausschrauben einer Schraube unterschritten wird. Das zu geringe Drehmoment zeigt eine gelockerte Schraube an.

Auf diese Weise wird erreicht, dass die gelockerte Schraube nicht vollständig aus dem Werkstück herausgeschraubt wird, sondern noch im Werkstück stecken bleibt. Damit ist die Gefahr vermindert, dass die Schraube verloren geht.

In einer Ausführungsform wird das abgegebene Drehmoment anhand eines Wertes eines Stromes erfasst, der vom Elektromotor aufgenommen wird, wobei der Elektromotor gestoppt wird, wenn der Wert des Stromes unter einen vorgegebenen Grenzwert fällt. Die geringe Stromaufnahme zeigt an, dass sich die Schraube leicht drehen lässt, d.h. nur schon locker sitzt.

In einer Ausführungsform wird beim Herausschrauben einer Schraube der Elektromotor gestoppt wird, wenn die Schraube nach einer Aktivierung des Elektromotors eine vorgegebene Anzahl von Umdrehungen aus einer Sitzposition herausgeschraubt wurde. Vorzugsweise kann die Anzahl der Umdrehungen von einer Bedienperson beispielsweise durch eine Eingabe festgelegt werden. Damit wird zusätzlich die Gefahr vermindert, dass die Schraube beim Herausschrauben verloren geht. Zudem wird die Handhabung des Elektrowerkzeuges verbessert.

Eine weitere Ausführungsform betrifft ein Verfahren zum Steuern eines Elektromotors eines Elektrowerkzeuges mit einer Aufnahme für ein Werkzeug zum Herausschrauben einer Schraube von einem Gegenstück, wobei abhängig von einem Sitzmoment der Schraube unterschiedliche Steuerverfahren zum Herausschrauben der Schraube oder des Werkstückes verwendet werden.

In einer weiteren Ausführungsform werden abhängig von einer durch eine Bedienperson vorgegebenen Drehzahl des Elektromotors und/oder abhängig von einer Geschwindigkeit einer Betätigung eines Schalters zum Vorgeben der Drehzahl verschiedene Steuerverfahren zum Herausdrehen der Schraube gewählt werden.

In einer weiteren Ausführungsform wird der Elektromotor in einer ersten Phase gemäß einer vorgegebenen Drehzahl angesteuert, wobei der Strom des Elektromotors während der ersten Phase erfasst wird, wobei der erfasste Strom mit einem Grenzwert verglichen wird, wobei bei Überschreiten des Grenzwertes der Elektromotor während einer folgenden zweiten Phase mit einer vorgegebenen zweiten Drehzahl angesteuert wird, wobei der Strom des Elektromotors während der zweiten Phase erfasst wird, wobei abhängig von dem erfassten Strom der zweiten Phase eine gelöste Schraube erkannt wird und die Drehzahl des Elektromotors wenigstens reduziert oder gestoppt wird, und wobei der Grenzwert von dem Sitzmoment und/oder von der durch die Bedienperson vorgegebenen Drehzahl abhängt.

In einer Ausführungsform wird der Elektromotor in einer ersten Phase gemäß einer von einer Bedienperson vorgegebenen Drehzahl angesteuert, wobei eine Zeitdauer insbesondere mithilfe eines Zählers erfasst wird, während der der Elektromotor in der ersten Phase verweilt, wobei bei Überschreiten einer vorgegebenen Zeitdauer, insbesondere eines Zählerstandes, der Elektromotor während einer folgenden zweiten Phase mit einer vorgegebenen zweiten Drehzahl, insbesondere mit einer maximalen Drehzahl angesteuert wird, wobei der Strom des Elektromotors während der zweiten Phase erfasst wird, wobei abhängig von dem erfassten Strom des Elektromotors während der zweiten Phase eine gelöste Schraube erkannt wird und die Drehzahl des Elektromotors wenigstens reduziert oder der Elektromotor gestoppt wird.

In einer weiteren Ausführungsform wird abhängig von einem Unterschreiten eines vorgegebenen Stromgrenzwertes und/oder abhängig von einem Überschreiten eines vorgegebenen negativen zeitlichen Gradienten eine gelöste Schraube erkannt und die Drehzahl des Elektromotors wenigstens reduziert oder der Elektromotor gestoppt.

In einer weiteren Ausführung wird das Sitzmoment der Schraube anhand des Stromes abgeschätzt, der vom Elektromotor aufgenommen wird.

Die beschriebenen Verfahren können auch auf das Herausschrauben von Schraubenbolzen oder Schraubenmuttern oder anderen geschraubten Teilen angewendet werden.

Die Erfindung wird im Folgenden anhand der Figuren näher erläutert. Es zeigen

Figur 1      einen schematischen Querschnitt durch ein Elektrowerkzeug,
Figur 2      einen zweiten Querschnitt durch das Elektrowerkzeug,
Figur 3      eine schematische Darstellung einer Schaltungsanordnung zum Antreiben eines Elektromotors eines Elektrowerkzeuges,
Figur 4      einen ersten schematischen Programmablauf zum Betreiben des Elektrowerkzeuges,
Figur 5      einen zweiten schematischen Programmablauf zum Betreiben des Elektrowerkzeuges,
Figur 6      einen dritten schematischen Programmablauf zum Betreiben des Elektrowerkzeuges,
Figur 7      einen vierten schematischen Programmablauf zum Betreiben des Elektrowerkzeuges,
Figur 8      einen fünften schematischen Programmablauf zum Betreiben des Elektrowerkzeuges,
Figur 9      einen sechsten schematischen Programmablauf zum Betreiben des Elektrowerkzeuges,
Figur 10      in einer schematischen Darstellung einen zeitlichen Verlauf des Stromes I für den Elektromotor bei einem Herausdrehen einer Schraube,
Figur 11      in einer schematischen Darstellung einen Programmablauf, mit dem eine Beeinflussung des Herausdrehens einer Schraube aus einem Werkstück erfolgt, und
Figur 12      in einem Diagramm den Strom I über die Zeit t für verschiedene Verfahren zum automatischen Herausdrehen einer Schraube.

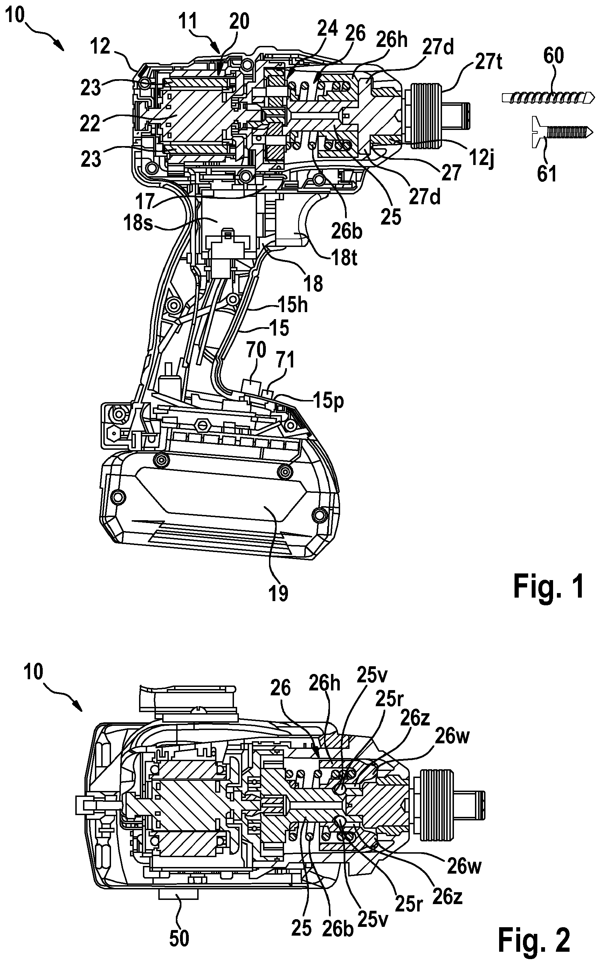

Figur 1 zeigt in einer schematischen Darstellung ein Elektrowerkzeug 10, das in Form eines Schlagschraubers 10 ausgebildet ist. Der Schlagschrauber 10 weist ein Gehäuse 11 auf, das einen zylinderförmigen Hauptkörper 12 und einen daran angebrachten Griff 15 aufweist. Gegenüberliegend zum Hauptkörper 12 ist eine Batterie 19 angeordnet. Im Hauptkörper 12 ist ein Elektromotor 20 in Form eines bürstenlosen Gleichstrommotors 20 mit einem Planetengetriebe 24, einer Spindel 25, einem Schlagerzeugungsmechanismus 26 und einem Amboss 27 angeordnet. Der Elektromotor 20 dient als Antriebsquelle für den sich drehenden Schlagerzeugungsmechanismus 26. Die Drehzahl des Elektromotors 20 wird mithilfe des Planetengetriebes 24 reduziert und anschließend auf die Spindel 25 übertragen. Die Drehkraft der Spindel 25 wird in eine drehende Schlagkraft durch den Schlagerzeugungsmechanismus 26 umgewandelt, wozu ein Hammer 26h und eine Druckfeder 26b vorgesehen sind. Eine Schlagkraft des Hammers 26h wird auf den Amboss 27 übertragen. Der Amboss 27 ist drehbar um eine Achse gelagert und wird durch die rotatorische Schlagkraft des Hammers 26h angetrieben. Der Amboss 27 ist durch ein Lager 12j drehbar im Gehäuse 11 gehalten, das an einer Vorderseite des Hauptkörpers 12 angeordnet ist. Somit kann sich der Amboss 27 um die Drehachse drehen, jedoch sich nicht entlang der Drehachse bewegen. An einer Vorderseite des Ambosses 27 ist eine Aufnahme 27t vorgesehen, um z.B. einen Bohrer 60 oder über einen Einsatz eine Schraube 61 aufzunehmen. Der Bohrer 60 oder die Schraube 61 stellen das Werkzeug dar, das vom Elektrowerkzeug angetrieben wird.

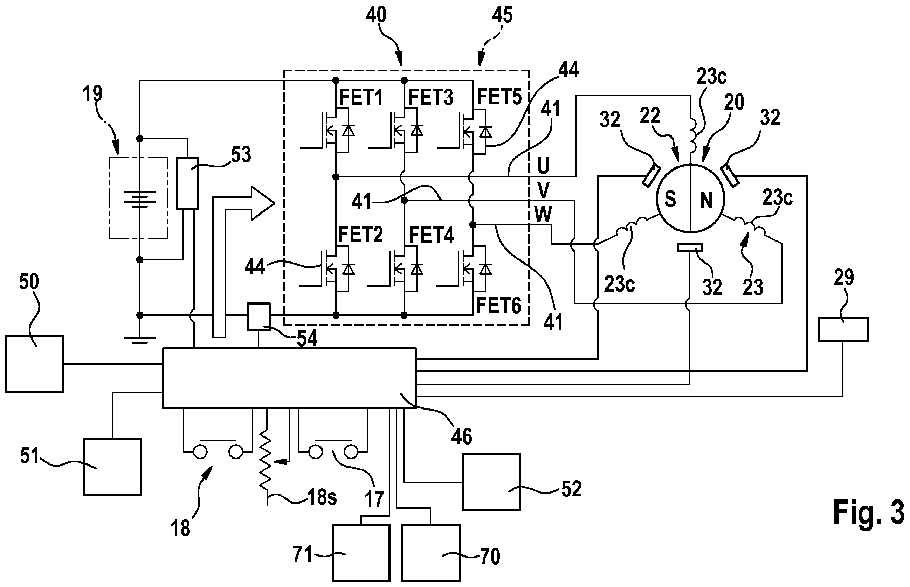

Der Griff 15 des Gehäuses 11 wird von einer Bedienperson umfasst, um das Elektrowerkzeug 10 zu benutzen. Der Griff weist einen Halteabschnitt 15h und einen unteren Endabschnitt 15p auf, der sich am unteren Ende des Griffabschnittes 15h anschließt. Am unteren Endabschnitt 15p ist die Batterie 19 vorgesehen, die das Elektrowerkzeug 10 mit Strom versorgt. Am Griffabschnitt 15h ist ein Hauptschalter 18 vorgesehen, der einen Trigger 18t aufweist, der mit einem Finger betätigt werden kann. Weiterhin weist der Hauptschalter 18 eine Schaltereinheit 18s auf, die zum Einschalten oder Ausschalten des Elektrowerkzeuges verwendet wird. Der Trigger 18t wird dazu verwendet, um in Abhängigkeit vom Betätigungsweg des Triggers 18t eine Größe der Ansteuerung des Elektromotors 20 zu erhöhen. Der Trigger stellt einen Schalter zum vorgeben der Drehzahl des Elektromotors dar. Der Betätigungsweg des Triggers 18t wird beispielsweise mithilfe der Schaltereinheit 18s beispielsweise als Widerstandswert erfasst und an eine Steuerschaltung (46, Fig.3) gemeldet. Wenn sich der Widerstandswert der Schaltereinheit 18s des Hauptschalters 18 entsprechend dem Einrückzustand des Triggerschalters 18t ändert, dann passt die Steuerschaltung (46, Fig.3) z.B. eine Drehzahl der Ansteuerung des Elektromotors 20 an. Auf diese Weise kann die Drehzahl und/oder das Drehmoment des Elektromotors 20 gesteuert werden.

Weiterhin ist oberhalb des Hauptschalters 18 ein Richtungsschalter 17 vorgesehen, der abhängig von einer Position die Drehrichtung der Aufnahme 27t festlegt. Der Richtungsschalter 17 kann als Schiebeschalter oder als Drehschalter ausgebildet sein. In einer ersten Position des Richtungsschalters 17 dreht das Elektrowerkzeug 10 bei gleichzeitiger Betätigung des Hauptschalters 18 in einer Rechtsrichtung im Uhrzeigersinn, d. h. im Normalbetrieb z.B. zum Einschrauben einer Schraube. In einer zweiten Position des Richtungsschalters 17 und bei gleichzeitiger Betätigung des Hauptschalters 18 dreht das Elektrowerkzeug 10 in einer Linksrichtung, d. h. entgegen dem Uhrzeigesinn in einem Herausschraubbetrieb bzw. Lösebetrieb zum Herausschrauben bzw. zum Lösen einer Schraube.

Zudem kann das Elektrowerkzeug einen Schalter 70 aufweisen. Der Schalter 70 kann als Dreh - oder Schiebeschalter ausgebildet sein. Die Position des Schalters 70 wird an die Steuerschaltung (46, Fig.3) gemeldet. In einer ersten Position des Schalters 70 wird beim Herausschrauben einer Schraube, d.h. bei einer zweiten Position des Richtungsschalters 17 und einer Betätigung des Hauptschalters 18 ein Verfahren zum Lösen einer Schraube durchgeführt, bei dem abhängig von wenigstens einem Parameter das Herausschrauben der Schraube beeinflusst wird. Insbesondere wird ein automatisches Verfahren durchgeführt, bei dem ein gewünschter Lösezustand der Schraube erreicht werden soll. Insbesondere soll die Schraube nicht vollständig aus der Verschraubung gelöst werden, so dass die Schraube beispielsweise nicht verloren wird. Abhängig von der gewählten Ausführung kann eine Anzeige 71 vorgesehen sein, die anzeigt, ob das automatische Verfahren zum Herausschrauben einer Schraube aktiviert ist. Die Anzeige kann in Form einer Lampe oder einer LED ausgebildet sein. Dabei kann die Anzeige beispielsweise in den Schalter 70 integriert sein.

Fig. 2 zeigt in einem weiteren Querschnitt weitere Details des Elektrowerkzeuges 10. Der Hammer 26h des Schlagerzeugungsmechanismus 26 ist mit der Spindel 25 über v-förmige erste Führungsnuten 25v, v-förmige zweite Führungsnuten 26z und Stahlkugeln 25r verbunden. An einer Frontseite der Spindel 25 sind an der Außenfläche die ersten Führungsnuten 25v angeordnet, wobei die ersten Führungsnuten 25v halbkreisförmige Abschnitte aufweisen, die mit den v-förmigen Öffnungen nach außen gerichtet sind. Weiterhin sind in einer inneren Umgebungsfläche des Hammers 26h gegenüberliegend zu den ersten Führungsnuten 25v der Spindel 25 die v-förmigen zweiten Führungsnuten 26z angeordnet. Die zweiten Führungsnuten 26z haben einen halbkreisförmigen Querschnitt, wobei die Nuten in eine Vorwärtsrichtung geöffnet sind. Die Stahlkugeln 25r sind zwischen den ersten Führungsnuten 25v und den zweiten Führungsnuten 26z angeordnet. Als Ergebnis ist der Hammer 26h in der Weise drehbar um einen vorgegebenen Winkel in Bezug auf eine Referenzposition der Spindel 25 gelagert, und in der Lage, sich in axialer Richtung gegenüber einer Längsachse der Spindel 25 zu bewegen. Weiterhin ist die Druckfeder 26b in Kontakt mit der Außenfläche der Spindel 25 und dem Hammer 26h, sodass der Hammer 26h in Richtung auf die Spindel 25 vorgespannt ist.

An einer vorderen Endfläche des Hammers 26h sind Schlagvorsprünge 26w ausgebildet, um Schläge auf den Amboss 27 an zwei um 180° zueinander versetzten Stellen zu erzeugen. Weiterhin hat der Amboss 27 an den zwei um 180° versetzten Stellen in Umfangsrichtung Schlagarme 27d (Fig.2) ausgebildet, die die Schläge der Schlagvorsprünge 26w des Hammers 26h aufnehmen. Der Hammer 26h wird durch die Vorspannkraft der Druckfeder 26b an der Spindel 25 gehalten, sodass die Schlagvorsprünge 26w des Hammers 26h an den Schlagarmen 27d des Ambosses 27 anliegen. Wenn in diesem Zustand die Spindel 25 durch den Elektromotor 20 gedreht wird, dann dreht sich der Hammer 26h zusammen mit der Spindel 25 und die Drehkraft des Hammers 26h wird auf den Amboss 27 über die Schlagvorsprünge 26w und die Schlagarme 27d übertragen. Auf diese Weise kann beispielsweise eine Schraube in einem Schlagbetrieb in ein Werkstück eingedreht werden.

Die Schraube kann beim Eindrehen eine Position im Werkstück erreichen, an der ein Einschraubwiderstand das Drehmoment des Hammers 26h übersteigt. Der Einschraubwiderstand wird als Drehmoment auf den Amboss 27 übertragen. Als Ergebnis wird der Hammer 26h gegen die Vorspannkraft der Druckfeder 26b von der Spindel zurück versetzt und die Schlagvorsprünge 26w des Hammers überstreichen die Schlagarme 27d des Ambosses 27. Dabei werden die Schlagvorsprünge 26w von der Anlage an den Schlagarmen 27d befreit, sodass sich die Schlagvorsprünge 26w einen festgelegten Winkel frei drehen können. Wenn sich die Schlagvorsprünge 26w des Hammers 26h über die Schlagarme 27d des Ambosses 27 bewegen, dann beschleunigt der Hammer seine Drehbewegung. Durch die Vorspannkraft der Druckfeder 26b wird der Hammer 26h innerhalb des festgelegten Winkels wieder in Richtung auf den Amboss 27 gedrückt, sodass die Schlagvorsprünge 26w des Hammers wieder in Kontakt gelangen mit den Schlagarmen 27d des Ambosses 27. Durch den Aufschlag der Schlagvorsprünge 26w auf die Schlagarme 27d wird ein erhöhtes Drehmoment auf den Amboss 27 und damit auf die Aufnahme 27t und die Schraube 61 bzw. den Bohrer 60 ausgeübt. Dieser Vorgang wird während des Schlagbetriebes laufend wiederholt.

Zudem kann das Elektrowerkzeug 10 eine Eingabeeinheit 50 aufweisen, mit der ein Benutzer des Elektrowerkzeuges beispielsweise die maximale Antriebszeit für den Elektromotor, insbesondere die maximale Antriebszeit des Elektromotors für einen Schlagbetrieb eingeben kann. Zudem kann ein Benutzer ein Parameter für eine Größe des Werkzeuges, insbesondere einen Durchmesser für eine Schraube oder einen Bohrer eingeben. Die Eingabeeinheit 50 ist mit der elektronischen Steuerschaltung (46, Fig. 3) und/oder mit einem Speicher (51, Fig. 3) verbunden.

Figur 3 zeigt in einer schematischen Darstellung eine Schaltungsanordnung des Elektrowerkzeuges 10 der Figur 1 zum Ansteuern des Elektromotors 20, der beispielsweise als bürstenloser Gleichstrommotor ausgebildet ist und von einer Ansteuerschaltung 40 angetrieben wird. Der Elektromotor 20 weist einen Rotor 22 mit Permanentmagneten und einen Stator 23 mit Antriebsspulen 23C auf. Die Ansteuerschaltung 40 ist eine elektrische Schaltung zum Ansteuern des Elektromotors 20 und weist eine Dreiphasenbrückenschaltung 45 auf, die sechs Schaltelemente 44 beispielsweise in Form von Feldeffekttransistoren aufweist. Weiterhin ist eine Steuerschaltung 46 vorgesehen, die die Schaltelemente 44 der Dreiphasenbrückenschaltung 45 in Abhängigkeit von der Schaltereinheit 18s ansteuert.

Die Dreiphasenbrückenschaltung 45 hat drei Ausgangsleitungen 41, die mit den entsprechenden Steuerspulen 23c des Elektromotors 20 verbunden sind. Die Steuerschaltung 46 ist ausgebildet, um die Schaltelemente 44 basierend auf Signalen von magnetischen Sensoren 32 in der Weise anzusteuern, dass ein elektrischer Strom sequentiell durch die Antriebsspulen 23c fließt, um den Rotor 22 mit einer gewünschten Drehzahl und/oder einem gewünschten Drehmoment zu drehen. Zudem kann die Steuerschaltung 46 mithilfe der magnetischen Sensoren 32 eine Drehzahl des Elektromotors 20 messen. Weiterhin steht die Steuerschaltung 46 mit einer Messeinrichtung 53 in Verbindung, die den Ladezustand der Batterie 19, insbesondere die Spannung der Batterie 19 erfasst und an die Steuerschaltung 46 weitergibt. Die Steuerschaltung 46 ist mit dem Schalter 70 verbunden.

Zudem weist das Elektrowerkzeug eine Eingabeeinheit 50 auf, mit der ein Benutzer des Elektrowerkzeuges beispielsweise die maximale Antriebszeit für einen Schlagbetrieb und/oder eine Größe, insbesondere einen Durchmesser für eine Schraube oder einen Bohrer eingeben kann. Die Eingabeeinheit 50 ist mit der elektronischen Steuerschaltung 46 verbunden. Zudem ist die elektronische Steuerschaltung 46 mit einem Speicher 51 verbunden. Im Speicher 51 sind Daten, Kennlinien, Kennfelder und/oder Berechnungsmethoden abgelegt. Weiterhin verfügt das Elektrowerkzeug über eine Ausgabe 52, über die ein Signal an den Benutzer, insbesondere ein Warnsignal über einen zu niedrigen Ladezustand der Batterie abgegeben werden kann. Dazu ist ein Grenzwert für den Ladezustand der Batterie im Speicher 51 abgelegt. Die Steuerschaltung 46 erfasst mithilfe der Messeinrichtung 53 die aktuelle Spannung der Batterie 19 und vergleicht die gemessene Spannung mit dem Grenzwert. Unterschreitet der Ladezustand der Batterie 19 den Grenzwert, dann gibt die Steuerschaltung 46 einen entsprechenden Hinweis optisch, akustisch und/oder haptisch über die Ausgabe 52 aus. Weiterhin kann der Benutzer durch eine entsprechende Eingabe den automatischen Betrieb des Elektromotors 20 abschalten.

Zudem kann die Steuerschaltung 46 einen Typ der Batterie 19, der beispielsweise durch einen Code auf der Batterie mitgeteilt wird, beispielsweise mithilfe eines Sensors, insbesondere mithilfe eines optischen Sensors erfassen. Der Typ der Batterie 19 legt fest, welche Batteriespannung einem ausreichenden Ladezustand entspricht. Im Speicher 51 kann für verschiedene Codes bzw. Typen von Batterien entsprechende Grenzwerte für die Spannung abgelegt sein, die einer ausreichenden Ladung der Batterie 19 für einen normalen Betrieb, insbesondere für einen Schlagbetrieb entspricht. Zum Festlegen des Ladezustandes misst die Steuerschaltung 46 mithilfe der Messeinrichtung 53 die Ladespannung der Batterie 19 und vergleicht diese mit abgespeicherten Grenzwerten. Vorzugsweise kann dabei der Typ der Batterie berücksichtigt werden, um präzise Grenzwerte für einen ausreichenden Ladezustand der Batterie 19 aus dem Speicher 51 auszulesen. Weiterhin kann die Steuerschaltung 46 den Strom des Elektromotors 20 mit einem Strommesser 54 und/oder die Drehzahl des Elektromotors 20 mit einem Drehzahlmesser 29 messen. Der Strom und/oder die Drehzahl können von der Steuerschaltung 46 verwendet werden, um festzustellen, wann ein Schlagbetrieb des Elektrowerkzeuges beginnt. Dazu sind entsprechende Schwellen bzw. Grenzwerte für den Strom des Elektromotors und die Drehzahl des Elektromotors im Speicher 51 abgelegt, die der Elektromotor 20 überschreitet, wenn ein Schlagbetrieb startet. Die Steuerschaltung 46 ist ausgebildet, um abhängig von einem erfassten Parameter des Elektromotors, insbesondere abhängig vom Strom und/oder von der Drehzahl eine Antriebszeit für einen Schlagbetrieb zu bestimmen. Dabei wird vorzugsweise auch der Ladezustand der Batterie berücksichtigt. Für die Bestimmung der Antriebszeit wird ein Kennfeld, eine Kennlinie, eine Tabelle oder entsprechendes Berechnungsverfahren verwendet. Das Kennfeld, die Kennlinie, die Tabelle oder das Berechnungsverfahren bestimmen einen Zusammenhang zwischen dem Strom und/oder der Drehzahl und der Antriebszeit. Am Ende der Antriebszeit, d. h. am Ende des Schlagbetriebes wird der Elektromotor 20 von der Steuerschaltung 46 gestoppt oder es wird eine elektronische Kupplung für eine kurze Zeitdauer aktiviert und anschließend wird der Elektromotor vollständig gestoppt. Der ermittelte Parameter für die Größe des Werkzeuges, insbesondere der Durchmesser des Bohrers und/oder der Schraube wird im Speicher abgelegt und für weitere Bohr- oder Schraubvorgänge von der Steuerschaltung 46 verwendet.

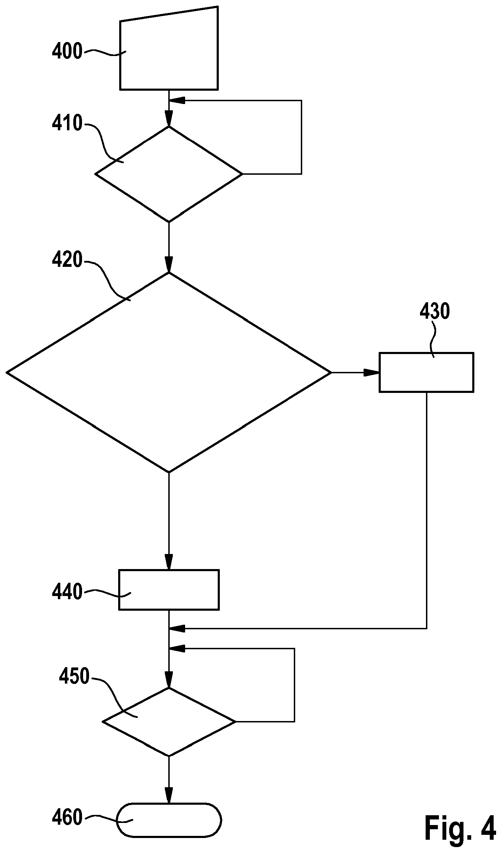

In einer ersten Ausführungsform, die anhand eines ersten Programmablaufes der Figur 4 erläutert wird, ermittelt die Steuerschaltung 46 bei Beginn eines Schlagbetriebes einen Parameter, der von einer Größe des Werkzeuges, insbesondere von einem Durchmesser einer Schraube oder eines Bohrers abhängt, vorzugsweise innerhalb einer vorgegebenen ersten Zeitdauer. Die erste Zeitdauer kann von einem Start des Schlagbetriebes z.B. bis zu 100 oder 200 Millisekunden oder länger nach dem Start des Schlagbetriebes dauern. Als Parameter werden z.B. der Strom und/oder die Drehzahl des Elektromotors in festgelegten Zeitabständen während der ersten Zeitdauer gemessen. Die gemessenen Werte für den Strom des Elektromotors und/oder die Werte für die Drehzahl des Elektromotors werden vorzugsweise gefiltert, um unerwünschte Fehlerdaten zu entfernen. Die Drehzahl und/oder der Strom werden dazu verwendet, um anhand von Tabellen eine Größe, insbesondere eine Antriebszeit für eine Ansteuerung des Elektromotors zu ermitteln. Anstelle einer Tabelle kann auch eine andere Berechnungsmethode und/oder eine Kennlinie verwendet werden, um die Größe für die Ansteuerung des Elektromotors zu ermitteln

Zudem kann die Ermittlung der Größe der Ansteuerung des Elektromotors auf zwei weitere Wege ermittelt werden. Ein erster Berechnungsweg ermittelt eine Standardabweichung der gemessenen Werte für den Strom und/oder eine Standardabweichung der gemessenen Werte für die Drehzahl während der ersten Zeitdauer während einer Ansteuerung des Elektromotors, insbesondere während der ersten 200 Millisekunden nach einem Beginn eines Schlagbetriebes des Elektrowerkzeuges 10.

Die Standardabweichung kann nach folgenden Formeln berechnet werden:
Die Standardabweichung $\sigma_X$ einer Zufallsvariablen $X$ ist definiert als die Quadratwurzel der Varianz Var($X$):

$$\sigma_X := \sqrt{\mathrm{Var}(X)}.$$

Dabei ist die Varianz

$$\mathrm{Var}(X) = \mathrm{E}((X - \mathrm{E}(X))^2) = \mathrm{E}(X^2) - (\mathrm{E}(X))^2$$

von $X$ stets größer oder gleich 0. Das Symbol E($\cdot$) bezeichnet den Erwartungswert.

Bei einer zweiten Berechnungsart wird die erste Zeitdauer in eine vorgegebene Anzahl von Teilintervallen unterteilt, beispielsweise in zehn Teilintervalle. Anschließend wird für jedes Teilintervall für die gemessenen Werte für den Strom eine Standardabweichung und/oder die Drehzahl eine Standardabweichung berechnet. Anschließend wird aus den zehn Standardabweichungen für den Strom und/oder die Drehzahl durch eine Mittelwertbildung eine gemittelte Standardabweichung für den Strom und/oder eine gemittelte Standardabweichung für die Drehzahl ermittelt.

Die Standardabweichung und/oder die gemittelte Standardabweichung der Drehzahl und/oder des Stromes werden dazu verwendet, um anhand von Tabellen eine Größe für eine Ansteuerung des Elektromotors zu ermitteln. Anstelle einer Tabelle kann auch eine andere Berechnungsmethode und/oder eine Kennlinie verwendet werden, um die Größe für die Ansteuerung des Elektromotors zu ermitteln.

Die Größe kann beispielsweise eine Antriebszeit zum Ansteuern des Elektromotors sein. Beispielsweise kann die Antriebszeit die Zeit festlegen, die der Elektromotor angetrieben wird, wenn der Taster gedrückt wird, um eine Schraube einzuschrauben. Nach der Antriebszeit wird die Spannungsversorgung des Elektromotors 20 reduziert oder abgebrochen. Die Antriebszeit ist die Zeit, die der Elektromotor während eines Schlagbetriebes des Elektrowerkzeuges angetrieben wird, um insbesondere eine Schraube in ein Werkstück einzuschrauben. Zudem kann die Größe der Ansteuerung des Elektromotors eine maximale Drehzahl und/oder ein maximales Drehmoment und/oder einen maximalen Strom betreffen.

Das Programm startet bei Programmpunkt 400. Bei einem folgenden Programmpunkt 410 wird überprüft, ob die Drehzahl n über einem vorgegebenen Grenzwert W liegt, und ob der Strom i über einem vorgegebenen Grenzwert I liegt. Sind beide Bedingungen nicht erfüllt, so wird der Programmpunkt 410 erneut durchlaufen. Ergibt die Abfrage, dass die Drehzahl n größer als der Grenzwert W ist und dass der Strom i des Elektromotors größer als der Grenzwert I ist, so wird zu Programmpunkt 420 verzweigt. Durch die Abfrage bei Programmpunkt 410 wird überprüft, ob sich das Elektrowerkzeug bereits in einem festgelegten Betriebszustand, z.B. im Schlagbetrieb befindet, in dem der Hammer immer wieder auf den Amboss schlägt. Entsprechende Grenzwerte W,I sind für die Drehzahl und den Strom festgelegt und im Speicher 51 abgelegt. Nach Erkennen des vorgegebenen Betriebszustandes wird die Antriebszeit für eine Ansteuerung des Elektromotors, insbesondere für einen Schlagbetrieb des Elektrowerkzeuges gestartet.

Beispielsweise kann überprüft werden, ob ein Schlagbetrieb vorliegt, indem eine Zeitdauer zwischen zwei Schlägen des Schlagbetriebes kleiner als ein erster Grenzwert ist. Der erste Grenzwert kann im Bereich zwischen 0,01 Sekunde und 0,05 Sekunden liegen. Der erste Grenzwert ist im Speicher 51 abgelegt. Die Schläge können beispielsweise anhand von Schallsensoren akustisch erfasst werden oder anhand des zeitlichen Verlaufes des Stroms durch den Elektromotor ermittelt werden. Zudem kann überprüft werden, ob eine Standardabweichung der gemessenen Drehzahl kleiner als ein zweiter Grenzwert ist. Der zweite Grenzwert kann im Bereich zwischen 30 und 90 liegen. Der zweite Grenzwert ist im Speicher 51 abgelegt. Wenn beide Bedingungen erfüllt sind, ist eindeutig ein Schlagbetrieb des Elektrowerkzeuges erkannt. Die Grenzwerte werden experimentell ermittelt und können von Elektrowerkzeug zu Elektrowerkzeug z.B. abhängig von der Art des Elektromotors variieren.

Zudem wird vorzugsweise automatisch von Programmpunkt 410 zu Programmpunkt 420 verzweigt, wenn eine vorgegebene erste Zeitdauer seit Betrieb des Elektromotors, insbesondere seit dem Beginn des Schlagbetriebes des Elektrowerkzeuges vergangen ist, auch wenn die Bedingungen von Programmpunkt 410 nicht erfüllt sind.

Bei Programmpunkt 420 wird abhängig von den gemessenen Werten für den Strom und/oder den gemessenen Werten für die Drehzahl des Elektromotors während einer ersten Zeitdauer im Programmpunkt 420 wenigstens ein Parameter des Elektromotors ermittelt. Als Parameter werden z.B. der Strom und/oder die Drehzahl des Elektromotors in festgelegten Zeitabständen während der ersten Zeitdauer gemessen. Die erste Zeitdauer kann z.B. von einem Start des Schlagbetriebes bis zu 200 Millisekunden nach dem Start des Schlagbetriebes dauern. Der ermittelte Strom und/oder die ermittelte Drehzahl und/oder die Standardabweichung der Drehzahl und/oder des Stromes und/oder die gemittelte Standardabweichung der Drehzahl und/oder des Stromes werden, wie oben beschrieben berechnet und dazu verwendet, um anhand von Tabellen eine Größe für eine Ansteuerung des Elektromotors zu ermitteln. Anstelle einer Tabelle kann auch eine andere Berechnungsmethode und/oder eine Kennlinie verwendet werden, um die Größe für die Ansteuerung des Elektromotors zu ermitteln.

Beispielsweise wird abhängig von dem Parameter als Größe eine Antriebszeit des Elektromotors während eines Schlagbetriebes festgelegt, wobei bei Aktivierung des Elektrowerkzeuges, insbesondere durch eine Betätigung eines Schalters der Elektromotor für die festgelegte Antriebszeit angetrieben wird, um z.B. eine Schraube in ein Werkstück im Schlagbetrieb einzuschrauben. Die Antriebszeit kann um die erste Zeitdauer verlängert sein, da erst nach der ersten Zeitdauer die Antriebszeit berechnet wird.

Zudem kann abhängig von dem Parameter als Größe ein Drehmoment und/oder eine Drehzahl festgelegt werden, mit denen der Elektromotor bei Aktivierung des Elektrowerkzeuges, insbesondere bei Betätigung eines Schalters im Schlagbetrieb angetrieben wird. In einer Ausführung sind dazu entsprechende Tabellen, Kennlinien oder Formeln abgelegt, um abhängig von dem erfassten Parameter Werte für den Strom und/oder die Drehzahl des Elektromotors während des Schlagbetriebes des Elektrowerkzeuges zu ermitteln.

Weiterhin kann der erfasste Parameter abhängig von einer Batteriespannung des Elektrowerkzeuges bewertet werden, insbesondere wenn die Batteriespannung unter einem vorgegebenen Grenzwert liegt.

Beispielsweise werden als Parameter eine Standardabweichung des Stroms, und/oder eine mittlere Standardabweichung des Stroms und/oder eine Standardabweichung der Drehzahl, und/oder eine mittlere Standardabweichung der Drehzahl verwendet. Zudem kann der Parameter mit dem Ladezustand der Batterie bewertet werden, bevor eine Größe der elektrischen Steuerung des Elektromotors abhängig von dem Parameter bzw. von dem bewerteten Parameter festgelegt wird.

Zudem kann die Antriebszeit beispielsweise während des Schlagbetriebes von dem Parameter, d.h. in Abhängigkeit von der Standardabweichung des Stroms, und/oder in Abhängigkeit von der mittleren Standardabweichung des Stroms und/oder in Abhängigkeit von der Standardabweichung der Drehzahl, und/oder in Abhängigkeit von der mittleren Standardabweichung der Drehzahl ermittelt werden. Beispielsweise wird bei der Bestimmung der Antriebszeit auch der Ladezustand der Batterie berücksichtigt. Zur Ermittlung der Antriebszeit, d. h. der Dauer der Antriebszeit während eines Schlagbetriebes wird beispielsweise ein Kennfeld, eine Kennlinie oder ein entsprechendes Berechnungsverfahren verwendet, mit dem in Abhängigkeit von der Standardabweichung des Stroms, und/oder in Abhängigkeit von der mittleren Standardabweichung des Stroms und/oder in Abhängigkeit von der Standardabweichung der Drehzahl, und/oder in Abhängigkeit von der mittleren Standardabweichung der Drehzahl die Antriebszeit ermittelt wird. Zudem wird beispielsweise der Ladezustand der Batterie berücksichtigt. Die ermittelte Antriebszeit wird im Speicher 51 abgelegt.

Beispielsweise kann die Steuerschaltung 46 überprüfen, ob während einer ersten Zeitdauer bei Programmpunkt 420 die Standardabweichung des Stroms größer als ein erster Grenzwert X1 ist und/oder ob die Standardabweichung der Drehzahl größer als ein erster Grenzwert Y1 ist .Sind diese Bedingungen nicht erfüllt, so wird zu Programmpunkt 430 verzweigt und der Elektromotor 20 wird mit einer mittleren Drehzahl angetrieben.

Beispielsweise kann die Steuerschaltung 46 überprüfen, ob während einer ersten Zeitdauer bei Programmpunkt 420 die mittlere Standardabweichung des Stroms größer als ein zweiter Grenzwert X2 ist, und/oder ob die mittlere Standardabweichung der Drehzahl größer als ein zweiter Grenzwert Y2 ist. Sind beide Bedingungen nicht erfüllt, so wird zu Programmpunkt 430 verzweigt und der Elektromotor 20 wird mit einer mittleren Drehzahl angetrieben.

Werden die Abfragen bei Programmpunkt 420 erfüllt, so wird zu Programmpunkt 440 verzweigt und der Elektromotor 20 wird mit einer hohen Drehzahl angetrieben.

Anschließend wird zu Programmpunkt 450 verzweigt. Eine hohe Geschwindigkeit bei Programmpunkt 440 ist erforderlich, um für ein Werkzeug mit einem großen Durchmesser ein ausreichend hohes Drehmoment bereitzustellen. Wohingegen eine mittlere Geschwindigkeit bei Programmpunkt 430 dafür sorgt, dass ein Werkzeug mit einem kleineren Durchmesser nicht abbricht.

Bei Programmpunkt 450 wird überprüft, ob die ermittelte Antriebszeit des Elektromotors während des Schlagbetriebes des Elektrowerkzeuges erreicht wurde. Ist dies der Fall, so wird bei Programmpunkt 460 das Drehmoment des Elektromotors reduziert bzw. eine Kupplung geöffnet oder der Elektromotor abgeschaltet. Auch bei einem Betrieb mit einer mittleren Geschwindigkeit bzw. Drehzahl des Antriebes gemäß Programmpunkt 430 wird bei Programmpunkt 450 überprüft, ob die ermittelte Antriebszeit während des Schlagbetriebes des Elektrowerkzeuges erreicht wurde. Ist dies der Fall, so wird bei Programmpunkt 460 das Drehmoment des Elektromotors reduziert bzw. eine Kupplung geöffnet oder der Elektromotor abgeschaltet.

Abhängig von der gewählten Ausführungsform können auch andere Verfahren oder Berechnungsmethoden verwendet werden, um abhängig vom Strom und/oder der Drehzahl eine während des Schlagbetriebes des Elektrowerkzeuges eine Größe für die Ansteuerung des Elektromotors, insbesondere eine Antriebszeit für den Schlagbetrieb zu ermitteln. Zudem kann abhängig von der gewählten Ausführung auf die unterschiedlichen Drehzahlen verzichtet werden und der Elektromotor während des Schlagbetriebes mit einer vorgegebenen Drehzahl und/oder mit einem vorgegebenen Drehmoment betrieben werden.

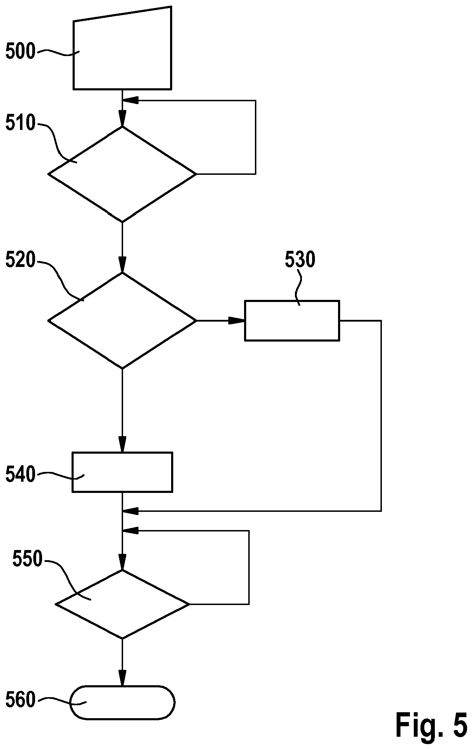

Figur 5 zeigt eine weitere Ausführungsform des Verfahrens. Das Programm startet bei Programmpunkt 500. Das Elektrowerkzeug weist eine Eingabeeinheit 50 auf, über die eine Bedienperson eine Größe eines Werkzeuges, insbesondere einen Durchmesser eines Bohrers oder einer Schraube eingeben kann. Die eingegebene Größe wird im Speicher 51 abgelegt. Vorzugsweise wird beim Start bei Programmpunkt 500 ebenfalls der Ladezustand der Batterie ermittelt. Anschließend wird bei Programmpunkt 510 überprüft, ob die Drehzahl n größer als ein erster Grenzwert W ist, und ob der Strom i des Elektromotors größer als ein erster Grenzwert I ist. Werden nicht beide Bedingungen erfüllt, so wird erneut Programmpunkt 510 durchgeführt. Mithilfe des Verfahrensschrittes 510 wird festgestellt, ob sich das Elektrowerkzeug in einem vorgegebenen Betriebszustand, insbesondere in einem Schlagbetrieb befindet. Entsprechend sind die Grenzwerte W,I für die Drehzahl und den Strom gewählt. Ergibt die Überprüfung bei Programmpunkt 510, dass die Drehzahl n größer als der Grenzwert W ist, und dass der Strom i des Elektromotors größer als der Grenzwert I ist, so wird ein vorgegebener Betriebszustand, insbesondere ein Schlagbetrieb erkannt und zu Programmpunkt 520 verzweigt.

In einer weiteren Ausführung kann überprüft werden, ob ein Schlagbetrieb vorliegt, indem eine Zeitdauer zwischen zwei Schlägen des Schlagbetriebes kleiner als ein erster Grenzwert ist. Der erste Grenzwert kann im Bereich zwischen 0,01 Sekunde und 0,05 Sekunden liegen. Der erste Grenzwert ist im Speicher 51 abgelegt. Die Schläge können beispielsweise anhand von Schallsensoren akustisch erfasst werden oder anhand des zeitlichen Verlaufes des Stroms durch den Elektromotor ermittelt werden. Zudem kann überprüft werden, ob eine Standardabweichung der gemessenen Drehzahl kleiner als ein zweiter Grenzwert ist. Der zweite Grenzwert kann im Bereich zwischen 30 und 90 liegen. Der zweite Grenzwert ist im Speicher 51 abgelegt. Wenn beide Bedingungen erfüllt sind, ist eindeutig ein Schlagbetrieb des Elektrowerkzeuges erkannt. Die Grenzwerte werden experimentell ermittelt und können von Elektrowerkzeug zu Elektrowerkzeug z.B. abhängig von der Art des Elektromotors variieren.

Bei Programmpunkt 520 wird abhängig von der eingegebenen Größe des Werkzeuges eine Antriebszeit für den Elektromotor ermittelt. Zur Ermittlung der Antriebszeit, d. h. der Dauer der Antriebszeit wird beispielsweise ein Kennfeld, eine Kennlinie oder ein entsprechendes Berechnungsverfahren verwendet, mit dem Abhängig von der Größe des Werkzeuges die Antriebszeit festgelegt wird.

Bei Programmpunkt 520 wird zudem überprüft, ob die eingegebene Größe größer als ein abgespeicherter zweiter Vergleichswert ist. Ergibt die Überprüfung bei Programmpunkt 520, dass die eingegebene Größe nicht größer als der zweite Vergleichswert ist, so wird zu Programmpunkt 530 verzweigt. Beispielsweise kann der zweite Vergleichswert einem Durchmesser von 14 mm entsprechen. Bei Programmpunkt 530 wird der Elektromotor mit einer mittleren Geschwindigkeit angetrieben.

Ergibt die Überprüfung bei Programmpunkt 520, dass die eingegebene Größe größer als der zweite Vergleichswert ist, so wird zu Programmpunkt 540 verzweigt. Bei Programmpunkt 540 wird der Elektromotor mit einer hohen Drehzahl, d. h. einer hohen Geschwindigkeit angetrieben. Anschließend erfolgt sowohl nach Programmpunkt 530 als auch nach Programmpunkt 540 bei einem folgenden Programmpunkt 550 die Abfrage, ob die gemessene Antriebszeit während des vorgegebenen Betriebszustandes, insbesondere während eines Schlagbetriebes größer als die ermittelte Antriebszeit ist. Ist dies nicht der Fall, so wird das Werkzeug vom Elektromotor weiter angetrieben.

Ergibt die Überprüfung bei Programmpunkt 550, dass die gemessene Antriebszeit größer als die ermittelte Antriebszeit ist, so wird anschließend bei Programmpunkt 560 das Drehmoment des Elektromotors reduziert, eine Kupplung geöffnet oder der Elektromotor abgeschaltet.

Wie bereits zu dem Programmablauf der Figur 4 ausgeführt, ist eine hohe Geschwindigkeit bei einem Werkzeug, insbesondere einem Bohrer oder einer Schraube mit einem großen Durchmesser erforderlich, um ein ausreichend großes Drehmoment zu erzeugen. Je größer die Drehzahl umso größer ist das Drehmoment.

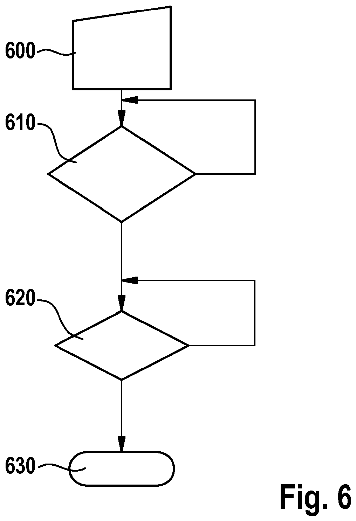

In einer weiteren Ausführungsform, die in Figur 6 dargestellt ist, startet das Programm bei Programmpunkt 600, wobei eine Bedienperson des Elektrowerkzeuges eine Antriebszeit für einen vorgegebenen Betriebszustand, insbesondere eine Antriebszeit für einen Schlagbetrieb über die Eingabeeinheit 50 eingegeben hat. Die Antriebszeit kann im Speicher 51 gespeichert werden. Die Antriebszeit kann beispielsweise im Bereich von 10 Sekunden liegen. Anschließend wird zu Programmpunkt 610 verzweigt. Bei Programmpunkt 610 wird überprüft, ob die Drehzahl n des Elektromotors größer als ein erster Grenzwert W ist, und ob der Strom i für den Elektromotor über einem ersten Grenzwert I liegt.

Der Programmpunkt 610 kann dazu dienen, um festzustellen, ob ein vorgegebener Betriebszustand, insbesondere ein Schlagbetrieb des Elektrowerkzeugs vorliegt. Entsprechend sind die Grenzwerte W und I gewählt. Zudem können auch andere Verfahren zum Erkennen eines Schlagbetriebes eingesetzt werden. Wurde ein Schlagbetrieb erkannt, so wird der Elektromotor abhängig von der Größe des Werkzeuges, insbesondere abhängig vom Durchmesser des Bohrers oder der Schraube mit einem festgelegten Drehmoment und/oder mit einer festgelegten Drehzahl für die von der Bedienperson vorgegebene Antriebszeit betrieben. Anschließend wird bei Programmpunkt 620 überprüft, ob die vorgegebene Antriebszeit abgelaufen ist. Ist dies der Fall, so wird das Drehmoment des Elektromotors reduziert, insbesondere der Elektromotor beim folgenden Programmpunkt 630 abgeschaltet.

In weiteren Ausführungsformen werden die Antriebszeit, das Drehmoment und/oder die Geschwindigkeit des Elektromotors für die Verfahren gemäß den Figuren 4 bis 6 in Abhängigkeit vom Ladezustand der Batterie von der Steuerschaltung 46 angepasst. Dazu sind entsprechende Berechnungsmethoden, Kennfelder und/oder Kennlinien im Speicher 51 abgelegt. Auf diese Weise wird sichergestellt, dass unabhängig vom Ladezustand der Batterie ein Bohrer und/oder eine Schraube eine vorgegebene Anzahl von Drehungen in ein Werkstück eingeschraubt wird bzw. mit einem vorgegebenen Anzugsdrehmoment eingeschraubt wird.

In einer weiteren Ausführungsform wird von der Steuerschaltung 46 ein Warnsignal ausgegeben, wenn die Spannung der Batterie 19 unter einen vorgegebenen Mindestwert fällt, der im Speicher 51 abgelegt ist. Auf diese Weise wird sichergestellt, dass der Benutzer des Elektrowerkzeuges die Möglichkeit hat, die Batterie erneut aufzuladen oder die Antriebszeit, die Drehgeschwindigkeit und/oder das Drehmoment entsprechend anzupassen, um ein gewünschtes Bohrergebnis oder Einschraubergebnis zu erzielen.

Abhängig von der gewählten Ausführungsform wird vor dem Abschalten des Elektromotors eine elektronische Kupplung aktiviert und das Drehmoment auf das Werkzeug reduziert und anschließend der Elektromotor abgeschaltet. Vorzugsweise wird bei jedem Start eines Programmablaufes der Ladezustand der Batterie beispielsweise durch Erfassen der Spannung der Batterie ermittelt.

Anschließend wird bei Programmpunkt 620 der Betrieb des Elektromotors gestoppt, wenn die vorgegebene Zeitdauer für die Antriebszeit erreicht ist. In einer weiteren Ausführungsform kann abhängig von dem Ladezustand die vom Benutzer vorgegebene Antriebszeit erhöht werden, wenn der Ladezustand der Batterie im Vergleich zum Referenzwert gesunken ist. Beispielsweise kann die Antriebszeit in Prozent um den Wert erhöht werden, den die Batterie unter dem Referenzwert liegt. Abhängig von der gewählten Ausführungsform können auch andere Größenordnungen oder Verfahren zum Anpassen der Antriebszeit in Abhängigkeit vom aktuellen Ladezustand der Batterie gewählt werden. Weiterhin kann die Steuerschaltung 46 ein Signal ausgeben, wenn der aktuelle Ladezustand der Batterie unter einer vorgegebenen Mindestschwelle liegt.

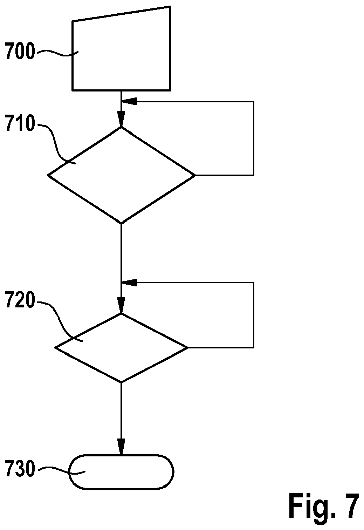

Figur 7 zeigt ein viertes Verfahren zum Betreiben des Elektrowerkzeuges. Nach dem Start bei Programmpunkt 700 wird bei einem folgenden Programmpunkt 710 überprüft, ob der Elektromotor sich in einem Linksdrehbetriebszustand, d.h. in einem Ausschraubbetrieb befindet, bei dem eine Schraube aus einem Werkstück herausgedreht wird. Ist dies der Fall, so wird bei einem folgenden Programmpunkt 720 überwacht, ob der Strom des Elektromotors und damit das Drehmoment des Elektromotors unter einen Vergleichswert fallen. Ist dies der Fall, so wird zu Programmpunkt 730 gesprungen und der Elektromotor gestoppt. Zudem kann abhängig von der gewählten Ausführungsform eine maximale Zeitdauer für das Herausdrehen einer Schraube verwendet werden, die nach Erkennen des Ausschraubbetriebes gemessen wird. Die maximale Zeitdauer ist beispielsweise im Speicher 51 abgelegt. Wird die maximale Zeitdauer erreicht, so wird von dem Verfahrensschritt 720 zum Verfahrensschritt 730 gesprungen und der Elektromotor gestoppt. Beim Herausdrehen einer Schraube wird zuerst ein Schlagbetrieb eingesetzt, um die Schraube vom Werkstück zu lösen. Nach einer gewissen Dauer des Schlagbetriebes ist die Schraube gelöst und das Drehmoment, mit dem die Schraube im Werkstück festgehalten wird, sinkt deutlich. Entsprechend sinkt auch der Strom des Elektromotors 20. Das Absinken des Stroms wird mithilfe des Strommessers 54 von der Steuerschaltung 46 erfasst und die Steuerschaltung 46 beendet gemäß Verfahrensschritt 720 das Herausdrehen der Schraube nach der maximalen Zeitdauer oder nach dem Abfallen des Stromes unter den Vergleichswert.

In einer weiteren Ausführungsform kann nach Aktivieren des Elektromotors zum Herausdrehen einer Schraube aus einem Werkstück eine festgelegte Anzahl von Umdrehungen vorgegeben sein, nach denen der Elektromotor stoppt. Beispielsweise kann die Anzahl von einer Bedienperson vorgegeben werden. Beispielsweise können drei Stufen vorgegeben werden. Niedrig, mittel und hoch. Die niedrige Stufe bedeutet z.B. 3 Umdrehungen, die mittlere Stufe bedeutet z.B. 5 Umdrehungen und die hohe Stufe bedeutet z.B. 8 Umdrehungen. Die Umdrehungen werden z.B. mit einem Sensor gemessen oder anhand des Stromverlaufes des Elektromotors bestimmt.

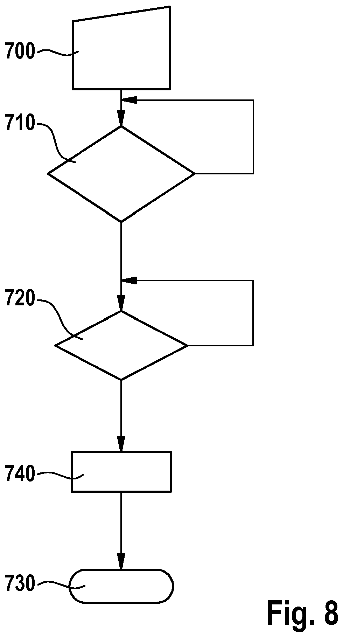

Figur 8 zeigt eine weitere Ausführungsform des Verfahrens gemäß Figur 7, wobei der Elektromotor 20 bei Erkennen eines Stromes unter dem Vergleichswert bei dem Verfahrensschritt 720 von der Steuerschaltung 46 nicht sofort gestoppt wird, sondern bei einem folgenden Verfahrensschritt 740 zuerst durch eine entsprechende Spannungsversorgung der Antriebsspulen 23c abgebremst und dann bei einem folgenden Verfahrensschritt 730 gestoppt wird. Auf alle Fälle wird der Elektromotor 20 nach Erreichen der maximal vorgegebenen Zeitdauer bei Programmpunkt 730 gestoppt.

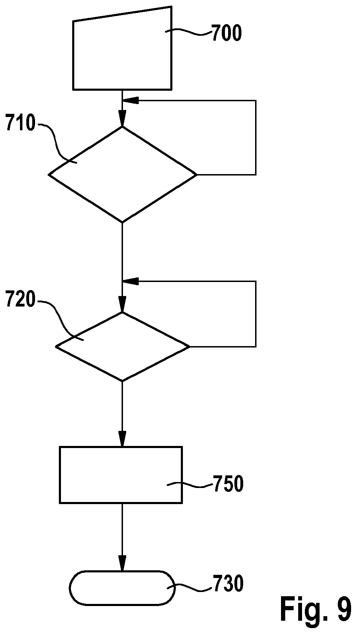

Figur 9 zeigt eine weitere Ausführungsform der Figur 7, wobei nach dem Programmpunkt 720 anstelle eines einfachen Abbremsvorganges gemäß Programmpunkt 740 von Figur 8 die Drehgeschwindigkeit des Elektromotors gemäß einem vorgegebenen Geschwindigkeitsprofil von der Steuerschaltung 46 durch eine entsprechende Ansteuerung der Antriebsspulen 23c reduziert wird und anschließend bei einem folgenden Programmpunkt 730 der Elektromotor gestoppt wird. Das Geschwindigkeitsprofil von Programmschritt 750 kann beispielsweise in einem linearen Absinken der Drehzahl oder in einem stufenweisen Absinken der Drehzahl des Elektromotors 20 bestehen. Abhängig von der gewählten Ausführungsform können auch andere Geschwindigkeitsprofile verwendet werden.

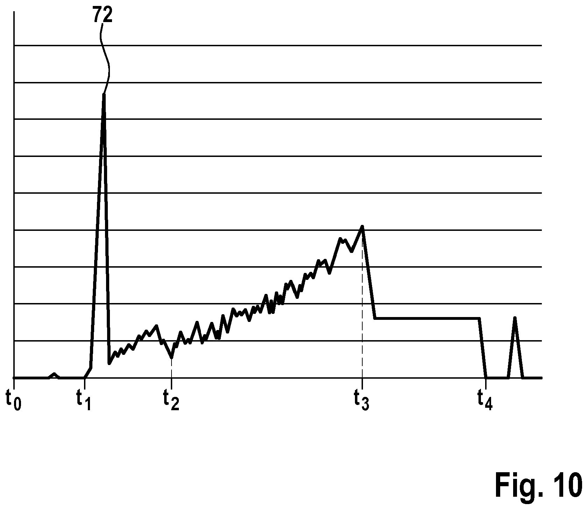

Figur 10 zeigt in einer schematischen Darstellung einen zeitlichen Verlauf des Stromes I für den Elektromotor bei einem Herausdrehen einer Schraube, die in ein Werkstück eingeschraubt ist. Der Verlauf des Stromes I des Elektromotors des Elektrowerkzeuges kann dazu verwendet werden, um eine Information über den Befestigungszustand der Schraube zu erhalten. Abhängig von der Art der Befestigung können verschiedene Verfahren zum automatischen Herausdrehen der Schraube durchgeführt werden. Für die Erkennung des Befestigungszustandes können drei wesentliche Phasen des Stromverlaufes berücksichtigt werden.

Zum nullten Zeitpunkt t0 ist der Elektromotor nicht aktiviert. Bei einem folgenden ersten Zeitpunkt t1 ist die Drehrichtung des Elektrowerkzeuges auf linksdrehend gestellt, das heißt auf Herausdrehen einer Schraube eingestellt und zudem wird zum ersten Zeitpunkt t1 mithilfe des Hauptschalters 18 beziehungsweise des Triggers 18t der Elektromotor aktiviert, um die Schraube herauszudrehen. In dem vorliegenden Beispiel ist die Schraube mit einer hohen Sitzkraft fest in ein Werkstück eingedreht. Somit steigt beim Aktivieren des Elektromotors zum Herausdrehen der Schraube der Strom für den Elektromotor in einer ersten Phase kurz nach dem Aktivieren des Elektromotors schnell und hoch an, so dass eine Stromspitze 72 kurz nach dem ersten Zeitpunkt t1 auftritt, die mithilfe des Strommessers erfasst wird. Die Stromspitze 72 zeigt an, dass eine Schraube gelöst wird, die mit einem großen Sitzmoment in einem Werkstück eingeschraubt ist. Der Strom fällt nach einer kurzen Zeit wieder von dem Spitzenwert ab. Bei einem zweiten Zeitpunkt t2 wird der Schlagbetrieb des Elektrowerkzeuges aktiviert, um die befestigte Schraube zu lösen. Der Betrieb des Schlagmechanismus kann anhand einer Welligkeit des Stromverlaufes und anhand eines Anstieges des Stromes zwischen dem zweiten Zeitpunkt t2 und einem dritten Zeitpunkt t3 erkannt werden. Der Schlagbetrieb zwischen dem zweiten und dritten Zeitpunkt stellt die zweite Phase dar. Nach dem dritten Zeitpunkt t3 fällt der Strom abrupt auf einen niedrigeren Wert ab. Der Wert des Stromabfalles kann im Bereich von 20 % und mehr liegen. Der abrupte Stromabfall zeigt eine dritte Phase an, bei der die Schraube gelockert ist und der Schlagbetrieb nicht mehr aktiv ist. In der dritten Phase kann die Schraube im Vergleich zum Schlagbetrieb mit einem geringeren Drehmoment aus dem Werkstück herausgedreht werden. Somit wird anhand des Stromabfalles nach dem dritten Zeitpunkt t3 erkannt, dass sich die Schraube nun ohne Schlagbetrieb herausdrehen lässt. Zwischen dem dritten Zeitpunkt t3 und einem vierten Zeitpunkt t4, bei dem der Strom abfällt, wird die Schraube bei geringem Widerstand aus dem Werkstück herausgeschraubt. Dieser typische Stromverlauf beim Herausdrehen einer Schraube, die in ein Werkstück eingeschraubt ist, kann für ein automatisiertes Verfahren genutzt werden, bei dem ein vollständiges Herausschrauben der Schraube aus dem Werkstück verhindert werden soll, damit sich die Schraube nicht vollständig vom Werkstück löst.

Beispielsweise wird die Drehzahl des Elektromotors reduziert, insbesondere der Elektromotor gestoppt, wenn der Wert des Stromes nach dem dritten Zeitpunkt t3 unter einen vorgegebenen Grenzwert fällt. Beispielsweise wird die Drehzahl des Elektromotors reduziert, insbesondere der Elektromotor gestoppt, wenn der negative zeitliche Gradient des Stromes nach dem dritten Zeitpunkt t3 größer ist als ein Vergleichsgradient. Dabei können sowohl der Grenzwert für den Strom und/oder der Vergleichsgradient von einem Strom des Elektromotors in der Anfangsphase beim Herausschrauben der Schraube abhängen. Der vom Elektromotor aufgenommene Strom hängt vom Sitzmoment der Schraube ab. Die Anfangsphase kann nach dem ersten Zeitpunkt t1 beginnen und sich bis zum zweiten und/oder dritten Zeitpunkt t2, t3 erstrecken. Zudem kann die Anfangsphase auch erst zum zweiten Zeitpunkt t2 beginnen und sich bis zum dritten Zeitpunkt t3 erstrecken. Zudem können sowohl der Grenzwert für den Strom und/oder der Vergleichsgradient abhängig von einer durch eine Bedienperson vorgegebenen Drehzahl des Elektromotors und/oder abhängig von einer Geschwindigkeit einer Betätigung eines Schalters zum Vorgeben der Drehzahl verschiedene Werte annehmen.

Zudem wird in einer Ausführungsform nach dem dritten Zeitpunkt t3 abhängig von einem Unterschreiten eines vorgegebenen Stromgrenzwertes und/oder abhängig von einem Überschreiten eines vorgegebenen negativen zeitlichen Gradienten des Stromes eine gelöste Schraube erkannt und die Drehzahl des Elektromotors wenigstens reduziert oder der Elektromotor gestoppt.

Das Sitzmoment der Schraube kann anhand eines Stromes abgeschätzt werden, der vom Elektromotor insbesondere in einer Anfangsphase nach dem ersten Zeitpunkt t1, insbesondere nach dem zweiten Zeitpunkt t2 beim Herausdrehen der Schraube aufgenommen wird. Die Grenzwerte und Vergleichsgradienten können auch beispielsweise bei Versuchsreihen experimentell ermittelt werden und abgespeichert werden.

Zur Umsetzung einer automatischen Herausdrehfunktion kann am Ende des Verfahrens ein weiches Bremsverfahren zum Stoppen des Elektromotors eingesetzt werden. In einer einfachen Ausführungsform kann beispielsweise bei Erkennen des Stromabfalles nach dem dritten Zeitpunkt t3 die Geschwindigkeit des Motors auf eine vorgegebene niedrige Geschwindigkeit reduziert bzw. abgebremst werden. Das Abbremsen des Elektromotors kann so lange durchgeführt werden, bis die Geschwindigkeit des Elektromotors kleiner ist als der mechanische Widerstand des Elektrowerkzeuges. Anschließend wird die Drehzahl des Elektromotors graduell auf den Wert Null reduziert. Auf diese Weise wird der Motor schneller auf die Drehzahl Null abgebremst. Die Abbremsung des Elektromotors kann mechanisch oder durch eine entsprechende elektrische Ansteuerung des Elektromotors erfolgen.

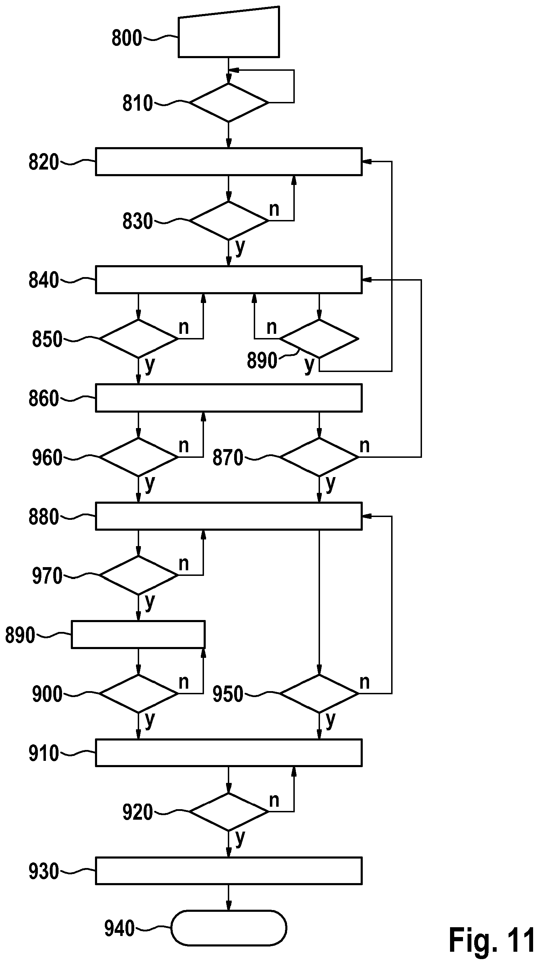

Figur 11 zeigt in einer schematischen Darstellung einen Programmablauf, mit dem eine Beeinflussung des Herausdrehens einer Schraube aus einem Werkstück in der Weise erfolgen kann, dass die Schraube nicht vollständig vom Werkstück gelöst wird. Dadurch wird verhindert, dass sich die Schraube vollständig vom Werkstück löst. Dies ist insbesondere von Vorteil, wenn die Schraube über Kopf einer Bedienperson mit dem Elektrowerkzeugs gelöst wird. Zudem ist dies von Vorteil, wenn in großen Höhen beispielsweise an einer Außenfassade eines Gebäudes größere Schrauben oder Bolzen gelöst werden, die auf vorbeigehende Personen fallen könnten. Zudem wird mithilfe der vorgeschlagenen Verfahren eine unnötige Begrenzung der Drehzahl des Elektrowerkzeuges oder ein Abschalten des Elektrowerkzeuges z.B. bei Betätigen des Elektrowerkzeuges ohne Last vermieden. Somit wird eine Bedienperson nicht über die Funktionsfähigkeit des Elektrowerkzeuges verunsichert. Eine Begrenzung der Drehzahl oder ein Abschalten des Elektromotors findet dann statt, wenn eine gelöste Schraube erkannt wurde. Somit ist eine Funktion des Elektrowerkzeuges auch bei geringer Last oder ohne Last möglich.

In einer Ausführungsform kann nach Erkennen des Lösens der Schraube vom festen Sitz im Werkstück anhand des Stromabfalles nach dem dritten Zeitpunkt t3 (Figur 10) die Anzahl der Drehungen der Schraube erfasst werden. Dazu kann die Drehung des Elektromotors mithilfe eines Sensors, z.B. mithilfe des magnetischen Sensors erfasst werden. Beispielsweise kann nach Erkennen des Stromabfalles nach dem dritten Zeitpunkt t3 nach einer vorgegebenen Anzahl von Drehungen der Schraube um 360° eine Bestromung des Elektromotors automatisch durch die Steuerschaltung beendet werden. Beispielsweise kann nach drei oder fünf oder acht Umdrehung nach Erkennen des Stromabfalles zum dritten Zeitpunkt t3 automatisch der Elektromotor von der Steuerschaltung abgeschaltet werden, obwohl die Bedienperson weiterhin den Trigger 18t betätigt. Abhängig von der gewählten Ausführungsform kann die Bedienperson durch Betätigung der Eingabeeinheit die Anzahl der Umdrehungen festlegen, nach denen nach dem Erkennen des Stromabfalls beim dritten Zeitpunkt t3 der Elektromotor gestoppt wird.

Mithilfe des in Figur 11 dargestellten Programmablaufes können verschiedene Betriebssituationen beim automatischen Lösen der Schraube berücksichtigt werden. Beispielsweise kann die Steuerschaltung 46 abhängig von der Last, d.h. abhängig von dem Drehmoment mit dem die Schraube im Werkstück festsitzt unterschiedliche Verfahren durchführen, um die Schraube zu lösen. Zudem kann die Steuerschaltung 46 zusätzlich oder anstelle der Last die Art der Betätigung des Triggers 18t des Hauptschalters 18 durch eine Bedienperson berücksichtigen, um unterschiedliche automatische Verfahren durchzuführen, um beim Lösen der Schraube ein vollständiges Lösen der Schraube vom Werkstück zu verhindern. Unter der Last wird das Drehmoment verstanden, das anfangs benötigt wird, um die im Werkstück fest sitzende Schraube zu drehen. Je höher das Sitzmoment ist, mit dem die Schraube in das Werkstück eingeschraubt ist, umso größer ist die Last bzw. das Drehmoment, das vom Elektromotor aufgebracht werden muss, um die Schraube zu drehen.

Im Folgenden wird der Ablauf des Programmes für eine erste Betriebssituation beschrieben, bei der die Schraube mit einem großen Sitzmoment im Werkstück festsitzt und eine hohe Drehzahl von einer Bedienperson beim Elektrowerkzeug eingestellt wird, um die Schraube heraus zudrehen. Das Programm startet bei einem Programmpunkt 800, bei dem das Elektrowerkzeug in Betrieb genommen wird. Der Schalter 70 befindet sich in der Position, bei der das automatische Verfahren zum Verhindern eines vollständigen Lösens der Schraube vom Werkstück aktiviert ist. Anschließend wird bei einem folgenden Programmpunkt 810 überprüft, ob sich das Elektrowerkzeug in dem Betriebsmodus Herausdrehen einer Schraube oder Schraubenmutter, das heißt z.B. in einer Linksdrehung befindet. Ist dies der Fall, so wird zu einem folgenden Programmpunkt 820 verzweigt und ein Zähler auf den Wert Null gesetzt.

Bei Programmpunkt 820 kann zudem erfasst werden, welche Drehzahl eine Bedienperson vom Elektrowerkzeug anfordert. Beispielsweise kann eine Bedienperson eine niedrige Drehzahl zum Lösen der Schraube einstellen. Die Erfassung der gewünschten Drehzahl kann anhand der Art der Betätigung des Triggers 18t erfasst werden. Im vorliegenden Fall wird der Trigger 18t vollständig bis zum Anschlag gedrückt, so dass eine maximale Drehzahl des Elektromotors des Elektrowerkzeuges von der Bedienperson gewünscht wird. Zudem kann zusätzlich oder anstelle der Art des teilweisen oder des vollständigen Durchdrückens des Triggers 18t auch eine Geschwindigkeit der Betätigung des Triggers 18t erfasst werden. Die Geschwindigkeit der Betätigung des Triggers 18t kann zusätzlich oder anstelle des Betätigungsweges des Triggers 18t bei den folgenden automatischen Verfahren berücksichtigt werden. Die Geschwindigkeit der Betätigung des Triggers und/oder der Betätigungsweg des Triggers kann mit entsprechenden Sensoren wie z.B. Beschleunigungssensor oder Hall-Sensor erfasst und an die Steuerschaltung 46 geleitet werden. Die Steuerschaltung 46 erkennt eine gewünschte niedrige Drehzahl. bei einem Betätigungsweg von weniger als 50% des möglichen Betätigungsweges des Triggers 18t. Die Steuerschaltung 46 erkennt eine gewünschte hohe Drehzahl z.B. bei einem Betätigungsweg von mehr als 50% des möglichen Betätigungsweges des Triggers 18t. Zudem kann die Steuerschaltung 46 eine niedrige Drehzahl bei einer Betätigungsgeschwindigkeit des Triggers 18t annehmen, wenn die Betätigungsgeschwindigkeit unter einem abgelegten Vergleichswert liegt. Zudem kann die Steuerschaltung 46 eine gewünschte hohe Drehzahl bei einer Betätigungsgeschwindigkeit des Triggers 18t annehmen, wenn die Betätigungsgeschwindigkeit über dem abgelegten Vergleichswert liegt.

Bei Programmpunkt 820 wird in einer Ausführung die Drehgeschwindigkeit des Elektromotors proportional zu dem Betätigungsweg des Triggers 18t eingestellt. Wird der Trigger 18t nur halb eingedrückt, so wird der Elektromotor von der Steuerschaltung nur mit der halben der maximal möglichen Drehzahl angesteuert. Wird der Trigger vollständig eingedrückt, so steuert die Steuerschaltung den Elektromotor mit maximal möglicher Drehzahl an. Entsprechend kann auch die Geschwindigkeit der Betätigung des Triggers berücksichtigt werden.

Anschließend wird bei einem folgenden Programmpunkt 830 überprüft, ob der Strom I des Elektromotors länger als eine vorgegebene erste Zeitdauer t1 höher als ein vorgegebener erster Grenzwert I1 ist. Die erste Zeitdauer t1 kann beispielsweise zwischen 0,03 und 0,1 Sekunden betragen. Ist dies der Fall, so wird anschließend zu einem folgenden Programmpunkt 840 verzweigt. Ist dies nicht der Fall, so wird weiterhin Programmpunkt 820 durchgeführt. Bei Programmpunkt 840 wird die Drehzahl des Elektromotors weiterhin abhängig von der Art der Betätigung des Triggers 18t wie bei Programmpunkt 820 eingestellt.

Bei einem folgenden Programmpunkt 850 wird überprüft, ob der Strom des Elektromotors über einen vorgegebenen dritten Grenzwert I3 ansteigt. Ist dies der Fall, so wird der Zähler um den Wert 1 auf den Wert 1 erhöht und zu einem folgenden Programmpunkt 860 verzweigt. In der vorliegenden ersten Betriebssituation ist dies der Fall.

Ist dies nicht der Fall, so wird weiterhin Programmpunkt 840 ausgeführt. Verweilt das Programm länger als eine vorgegebene zweite Zeitdauer t2 bei Programmpunkt 840, so wird in einem Programmpunkt 890 überprüft, ob der Strom I des Elektromotors kleiner als ein vorgegebener zweiter Grenzwert I2 ist. Ist dies der Fall, so wird zum Programmpunkt 820 zurückverzweigt. Ist dies nicht der Fall, so wird weiterhin Programmpunkt 840 ausgeführt.

Bei Programmpunkt 860 wird die Drehzahl des Elektromotors weiterhin abhängig von der Art Betätigung des Triggers 18t von der Steuerschaltung wie bei Programmpunkt 820 gesteuert. Bei Programmpunkt 860 wird zudem in einem Programmpunkt 960 überprüft, ob der Zähler wenigstens den Wert 3 aufweist. Ist dies der Fall, so wird direkt zu Programmpunkt 880 verzweigt. Ist dies nicht der Fall, so verbleibt das Programm bei Programmpunkt 860.

Verweilt das Programm länger als eine vorgegebene zweite Zeitdauer t2 bei Programmpunkt 860, so wird bei einem Programmpunkt 870 überprüft, ob der Strom des Elektromotors größer als ein vorgegebener vierter Grenzwert I4 ist. Für den vierten Stromwert I4 können abhängig von einem Sitzmoment der Schraube und/oder abhängig von der gewünschten Drehzahl der Bedienperson, d.h. abhängig von dem Betätigungsweges des Triggers 18t, und/oder abhängig von der Geschwindigkeit der Betätigung des Triggers 18t unterschiedliche Werte abgespeichert sein. Auf diese Weise können verschiedene Betriebssituationen mit unterschiedlichen automatischen Verfahren durchgeführt werden. Ist der Strom des Elektromotors größer als ein vorgegebener vierter Grenzwert I4 , so wird von Programmpunkt 870 zu Programmpunkt 880 verzweigt. In der vorliegenden ersten Betriebssituation ist dies der Fall. Ist dies nicht der Fall, so wird zu Programmpunkt 840 zurückverzweigt.

Bei Programmpunkt 880 wird der Elektromotor von der Steuerschaltung mit einer maximalen Drehzahl betrieben. Damit wird die Drehzahl des Elektromotors unabhängig von der Art der Betätigung des Triggers auf einen hohen Wert, insbesondere auf 100 % der maximal möglichen Drehzahl eingestellt. Es können jedoch auch andere Werte als 100% der maximalen Drehzahl verwendet werden.

Bei Programmpunkt 970 erfolgt die Abfrage, ob der Zähler den Wert 1 aufweist. Ist dies der Fall, so wird anschließend zu Programmpunkt 890 verzweigt. Ist dies nicht der Fall, so verbleibt das Programm bei Programmpunkt 880.

Falls das Programm nach der Abfrage von Programmpunkt 970 bei Programmpunkt 880 verbleibt, wird anschließend bei Programmpunkt 950 überprüft, ob der Strom I des Elektromotors einen größeren zeitlichen Abfall als ein vorgegebener Vergleichswert aufweist, d.h. ob der Strom des Elektromotors schneller als der Vergleichswert absinkt. Der Vergleichswert ist im Speicher abgelegt. Ist dies nicht der Fall, so wird zu Programmpunkt 880 zurückverzweigt. Ergibt die Abfrage bei Programmpunkt 950, dass der Strom I des Elektromotors zeitlich schneller absinkt, d.h. einen größeren zeitlich negativen Gradienten als der vorgegebene Vergleichswert darstellt, so wird zu Programmpunkt 910 verzweigt. Ist der der negative zeitliche Gradient des Stromes größer als der Vergleichswert, so zeigt dies an, dass die Schraube gelöst ist und mit geringem Drehmoment gedreht werden kann.

Bei Programmpunkt 890 wird weiterhin die maximale Drehzahl durch die Steuerschaltung 46 für den Elektromotor vorgegeben. Zudem wird bei einem folgenden Programmpunkt 900 überprüft, ob der Strom des Elektromotors unter einen fünften Grenzwert I5 fällt. Ist dies der Fall, so bedeutet dies, dass die Schraube gelöst ist und es wird zu einem folgenden Programmpunkt 910 verzweigt. Ist dies nicht der Fall, so wird weiterhin Programmpunkt 890 ausgeführt.

Bei Programmpunkt 910 wird die Drehzahl auf einen vorgegebenen Wert eingestellt, der z.B. kleiner als 50 % der maximalen Drehzahl ist. Der vorgegebene Wert kann z.B. zwischen 5% und 10% der maximalen Drehzahl oder darunter liegen. Zudem wird ein Umdrehungszähler auf den Wert Null gesetzt. Anschließend wird nach einer vorgegebenen dritten Zeitdauer t3 bei Programmpunkt 910 bei einem folgenden Programmpunkt 920 überprüft, ob die Schraube sich wenigstens um eine vorgegebene Anzahl von Umdrehungen gedreht hat. Ist dies der Fall, so wird zu Programmpunkt 930 verzweigt und wenigstens die Bestromung des Elektromotors reduziert oder abgeschaltet oder der Elektromotors abgebremst. Anschließend wird das Programm bei Programmpunkt 940 beendet.

Die vorgegebene Anzahl der Umdrehungen kann beispielsweise zwischen drei und acht ganzen Umdrehungen liegen. Ergibt die Abfrage bei Programmpunkt 920, dass die vorgegebene Anzahl an Umdrehungen noch nicht erreicht ist, so wird weiterhin der Elektromotor gemäß Programmpunkt 910 angetrieben und es wird erneut die Abfrage von Programmpunkt 920 durchgeführt, bis die Anzahl der vorgegebenen Umdrehungen erreicht wurde und zu Programmpunkt 930 verzweigt wird.

Bei einer zweiten Betriebssituation, bei der die Schraube mit einem kleinen Sitzmoment im Werkstück festsitzt, und die Bedienperson eine hohe Drehzahl des Elektrowerkzeuges wünscht, wird der Programmablauf gemäß Figur 11 folgendermaßen durchlaufen:

Das Verfahren entspricht dem beschriebenen Verfahren für die erste Betriebssituation, wobei jedoch der vierte Stromwert I4 aufgrund des kleinen Sitzmomentes kleiner gewählt ist als in der ersten Betriebssituation. Beispielsweise können abhängig von dem erfassten Sitzmoment der Schraube und/oder abhängig von der gewünschten Drehzahl der Bedienperson, d.h. abhängig von dem Betätigungsweges des Triggers 18t, und/oder abhängig von der Geschwindigkeit der Betätigung des Triggers 18t unterschiedliche Werte für den vierten Stromwert I4 abgespeichert sein. Der vierte Stromwert I4 ist so zu wählen, dass die Abfrage bei Programmpunkt 870 ergibt, dass der gemessene Strom größer als der vierte Grenzwert I4 ist und deshalb nach der zweiten Zeitdauer t2 im Programmpunkt 860 nach Programmpunkt 880 verzweigt wird. Bei Programmpunkt 880 wird der Elektromotor wieder mit einer vorgegebenen hohen Drehzahl, insbesondere mit maximaler Drehzahl für eine vorgegebene Zeitdauer versorgt. Da der Zähler in diesem Fall den Wert 1 aufweist, wird aufgrund der Abfrage bei Programmpunkt 970 zu Programmpunkt 890 verzweigt. Dies bedeutet, dass ein Zustand mit einem kleinen Sitzmoment der Schraube und mit einer hohen gewünschten Drehzahl des Elektrowerkzeuges vorliegt. Anschließend werden die Programmpunkte 900 und folgende gemäß Fig. 11 abgearbeitet.

Zudem kann für ein kleines Sitzmoment der Schraube auch ein kleinerer dritter Grenzwert I3 für den Strom im Vergleich zu der ersten Betriebssituation mit hohem Sitzmoment abgespeichert sein. Beispielsweise können Tabellen oder Diagramme abgespeichert sein, in denen abhängig von dem erfassten Sitzmoment der Schraube unterschiedliche Werte für die Grenzwerte abgespeichert sein. Die Steuerschaltung wählt abhängig von dem Sitzmoment der Schraube, das während des zu Anfang des Programmes abgeschätzt wird, die entsprechenden Grenzwerte. Das Sitzmoment der Schraube kann z.B. abhängig vom Strom oder abhängig vom Anstieg des Stromes des Elektromotors während der Anfangsphase bei Programmpunkt 820 abgeschätzt werden. Dazu können entsprechende Diagramme oder Kennlinien oder Kennfelder abgelegt sein, mit denen einem Stromverlauf während des Programmpunktes 820 ein Sitzmoment zugeordnet ist. Zudem kann auch ein Drehmomentsensor am Elektrowerkzeug verwendet werden, um das Sitzmoment der Schraube in der Anfangsphase zu messen. Die Grenzwerte können von der Steuerschaltung abhängig von dem Drehmoment bzw. von dem Sitzmoment der Schraube ermittelt oder festgelegt werden, das beim Beginn des Herausdrehens der Schraube auftritt. Beispielsweise können für vorgegebene Drehmomentbereiche entsprechend unterschiedliche Werte für den ersten, den zweiten, den dritten und/oder den vierten Grenzwert abgelegt sein. Ansonsten wird das Verfahren gemäß der ersten Betriebssituation durchlaufen.

Das Verfahren gemäß Figur 11 wird für eine dritte Betriebssituation, bei dem die Schraube ohne wesentliches Sitzmoment im Werkstück sitzt, d.h. keine Last vorliegt und einer hohen gewünschte Drehzahl folgendermaßen durchlaufen:

Das Verfahren läuft von Programmpunkt 800 bis zu Programmpunkt 860 gemäß der zweiten Betriebssituation ab, wie oben beschrieben. Bei Programmpunkt 860 wird der Elektromotor gemäß der gewünschten Drehzahl der Bedienperson von der Steuerschaltung 46 betrieben. Anschließend erfolgt die Abfrage bei Programmpunkt 870, ob der Strom des Elektromotors größer als der vierte Grenzwert I4 ist. Der vierte Grenzwert I4 ist abhängig von dem vorliegenden Sitzmoment, d.h. keinem Sitzmoment noch kleiner zu wählen als bei der zweiten Betriebssituation. Folglich ergibt die Abfrage, bei Programmpunkt 870, dass der gemessene Strom kleiner als der vierte Grenzwert I4 ist. Somit wird zu Programmpunkt 840 zurückverzweigt. Anschließend wird Programmpunkt 840 ausgeführt. Bei einem folgenden Programmpunkt 850 wird überprüft, ob der Strom des Elektromotors über einen vorgegebenen dritten Grenzwert I3 ansteigt. Ist dies der Fall, so wird der Zähler um den Wert 1 auf den Wert 1 erhöht und zu einem folgenden Programmpunkt 860 verzweigt. Zu diesem Zeitpunkt ist der Strom größer als der dritte Grenzwert I3, so dass aufgrund der Abfrage bei Programmpunkt 850 der Zähler um den Wert 1 auf den Wert 2 erhöht wird.

Anschließend wird bei Programmpunkt 860 der Elektromotor von der Steuerschaltung 46 gemäß der gewünschten Drehzahl der Bedienperson betrieben. Zudem wird bei Programmpunkt 860 anhand von Programmpunkt 960 überprüft, ob der Zähler mindestens den Wert 3 aufweist. Ist dies der Fall, so wird zu Programmpunkt 880 verzweigt. Dies ist jedoch nicht der der Fall, so dass das Programm bei Programmpunkt 860 verbleibt. Verbleibt das Programm länger als die zweite Zeitdauer t2 bei Programmpunkt 860, so erfolgt bei Programmpunkt 870 die Abfrage, ob der Strom des Elektromotors größer als der vierte Grenzwert I4 ist. Dies ist nicht der Fall, so dass erneut zu Programmpunkt 840 zurückverzweigt wird.

Somit erfolgt nach Programmpunkt 840 wieder die Abfrage bei Programmpunkt 850, ob der Strom größer als der dritte Grenzwert I3 ist. In der jetzigen Situation ist der Strom kleiner als der dritte Grenzwert I3, so dass das Programm bei Programmpunkt 840 verbleibt. Ergibt die Abfrage bei Programmpunkt 890, dass der Strom kleiner als der zweite Grenzwert I2 ist, so wird zu Programmpunkt 820 zurückverzweigt und das Programm wird entsprechend weiter durchlaufen.

Betätigt nun die Bedienperson den Trigger 18t auf einen Maximalwert, so erkennt das Programm z.B. an einem niedrigen Strom, dass keine Last, d.h. kein Sitzmoment der Schraube vorliegt. Als Folge verbleibt das Programm bei Programmpunkt 840 und die die Drehzahl des Elektromotors wird gemäß der Betätigung des Triggers 18t gesteuert. Mithilfe dieses Verfahrens kann der Benutzer den Elektromotor mit der gewünschten Drehzahl betreiben, ohne dass die automatische Begrenzung des Antriebes des Elektromotors gemäß den Programmpunkten 910, 920,930 und 940 aktiviert werden. Dadurch wird die Handhabung des Elektrowerkzeuges für den Benutzer intuitiv verbessert. Aufgrund des fehlenden Sitzmomentes erkennt die Steuerschaltung, dass keine Schraube gelöst werden soll.

Bei einer vierten Betriebssituation, die einer mittleren bis hohen Last, d.h. einem mittleren bis hohem Sitzmoment der Schraube und einer gewünschten niedrigen bis mittleren Drehzahl oder einem gewünschten langsamen Anstieg der Drehzahl durch die Bedienperson entspricht, wird das Programm gemäß Figur 11 folgendermaßen durchlaufen: Das Programm startet bei einem Programmpunkt 800, bei dem das Elektrowerkzeug in Betrieb genommen wird. Der Schalter 70 befindet sich in der Position, bei der das automatische Verfahren zum Verhindern eines vollständigen Lösens der Schraube vom Werkstück aktiviert ist. Anschließend wird bei einem folgenden Programmpunkt 810 überprüft, ob sich das Elektrowerkzeug in dem Betriebsmodus Herausdrehen einer Schraube, das heißt z.B. Linksdrehung befindet. Ist dies der Fall, so wird bei einem folgenden Programmpunkt 820 ein Zähler auf den Wert Null gesetzt.

Bei Programmpunkt 800 kann zudem erfasst werden, welche Drehzahl und/oder welchen Anstieg der Drehzahl die Bedienperson vom Elektrowerkzeug anfordert. Beispielsweise kann eine Bedienperson eine niedrige Drehzahl und/oder einen langsamen Anstieg der Drehzahl zum Lösen der Schraube einstellen. Die Erfassung der Drehzahl kann anhand der Art der Betätigung des Triggers 18t von der Steuerschaltung erfasst werden. Wird der Trigger 18t nur bis maximal 60% bis zum Anschlag gedrückt, so wird eine gewünschte niedrige bis mittlere Drehzahl des Elektromotors erkannt. Zudem kann zusätzlich oder anstelle der Art des teilweisen oder vollständigen Durchdrückens des Triggers 18t auch eine Geschwindigkeit der Betätigung des Triggers 18t von der Steuerschaltung erfasst werden. Wird der Trigger 18t langsamer als eine abgespeicherte Vergleichsgeschwindigkeit betätigt, so wird ein gewünschter langsamer Anstieg der Drehzahl erkannt. Zusätzlich oder anstelle des Betätigungsweges des Triggers 18t kann die Steuerschaltung 46 auch die Geschwindigkeit der Betätigung des Triggers 18t bei den folgenden automatischen Verfahren berücksichtigen. Die Geschwindigkeit der Betätigung des Triggers und/oder der Betätigungsweg des Triggers kann mit entsprechenden Sensoren erfasst und an die Steuerschaltung 46 geleitet werden. Eine geringe gewünschte Drehzahl wird z.B. dann von der Steuerschaltung erkannt, wenn die Bedienperson den Trigger 18 t nur maximal 60% des möglichen Betätigungsweges durchdrückt. Aufgrund der geringen gewünschten Drehzahl kann die Steuerschaltung bei Programmpunkt 820 den Elektromotor mit einer Drehzahl zwischen 0 % und 60 % der maximalen Drehzahl ansteuern. Somit wird ein langsames Ansteigen der Drehzahl des Elektromotors erreicht.

Anschließend wird bei einem folgenden Programmpunkt 830 überprüft, ob der Strom I des Elektromotors länger als eine vorgegebene erste Zeitdauer t1 höher als ein vorgegebener erster Grenzwert I1 ist. Die erste Zeitdauer t1 kann beispielsweise zwischen 0,03 und 0,1 Sekunden betragen. Ist dies der Fall, so wird anschließend zu einem folgenden Programmpunkt 840 verzweigt. Ist dies nicht der Fall, so wird weiterhin Programmpunkt 820 durchgeführt. Bei Programmpunkt 840 wird die Drehzahl des Elektromotors weiterhin abhängig von der Art der Betätigung des Triggers 18t eingestellt.

Der dritte Grenzwert I3 für den Strom bei Programmpunkt 850 ist bei dieser Betriebssituation beispielsweise so gewählt, dass der Schlagmechanismus des Elektrowerkzeuges betätigt wird. Bei Programmpunkt 840 wird der Elektromotor gemäß der gewünschten Drehzahl der Bedienperson von der Steuerschaltung 46 angesteuert. Anschließend ergibt die Abfrage bei Programmpunkt 850, dass der Strom größer als der dritte Grenzwert I3 ist, so dass zu Programmpunkt 860 verzweigt wird. Zugleich wird der Zähler um den Wert 1 auf den Wert 1 erhöht. Anschließend erfolgt nach der zweiten Zeitdauer t2 bei Programmpunkt 870 die Abfrage, ob der Strom größer als der vierte Grenzwert I4 ist. Der vierte Grenzwert I4 ist größer gewählt wie bei der zweiten Betriebssituation. Somit ist bei der Abfrage bei Programmpunkt 870 der Strom kleiner als der vierte Grenzwert I4, so dass anschließend wieder zu Programmpunkt 840 zurückverzweigt wird.

Bei dem folgenden Programmpunkt 850 ergibt die Abfrage wieder, dass der Strom größer als der dritte Grenzwert I3 ist, so dass der Zähler um den Wert 1 erhöht wird und somit nun den Wert 2 aufweist.

Anschließend wird zu Programmpunkt 860 verzweigt. Anschließend erfolgt nach der zweiten Zeitdauer t2 bei Programmpunkt 870 die Abfrage, ob der Strom größer als der vierte Grenzwert I4 ist. Somit ist bei der Abfrage bei Programmpunkt 870 der Strom kleiner als der vierte Grenzwert I4. Dies ist nicht der Fall, so dass anschließend wieder zu Programmpunkt 840 zurückverzweigt wird.

Bei dem folgenden Programmpunkt 850 ergibt die Abfrage wieder, dass der Strom größer als der dritte Grenzwert I3 ist, so dass der Zähler um den Wert 1 erhöht wird und somit nun den Wert 3 aufweist.

Anschließend wird zu Programmpunkt 860 verzweigt. Bei Programmpunkt 860 wird nun anhand der Abfrage bei Programmpunkt 960 erkannt, dass der Zähler den Wert 3 aufweist, so dass direkt zu Programmpunkt 880 verzweigt wird. Der Wert 3 des Zählers zeigt an, dass die Schraube gelöst sein könnte.

Bei Programmpunkt 880 wird der Elektromotor mit der maximalen Drehzahl betrieben. Anschließend wird bei Programmpunkt 950 überprüft, ob der Strom des Elektromotors einen größeren zeitlichen Abfall als ein vorgegebener Wert aufweist. Der vorgegebene Wert für den zeitlichen Abfall des Stromes ist im Speicher abgelegt. Ergibt die Abfrage bei Programmpunkt 950, dass der gemessene zeitliche Abfall kleiner ist als der vorgegebene Wert, so wird zu Programmpunkt 880 zurückverzweigt. Ergibt die Abfrage bei Programmpunkt 950, dass der gemessene zeitliche Abfall größer als der vorgegebene Wert ist, so wird zu Programmpunkt 910 verzweigt. Ist der zeitliche Abfall des Stromes größer als der vorgegebene Wert, so zeigt dies an, dass die Schraube gelöst ist. Anschließend werden die Programmpunkte 910 bis 940 entsprechend abgearbeitet.

Bei einer fünften Betriebssituation, die keiner Last und einer geringen gewünschten Drehzahl und/oder einem gewünschten langsamen Anstieg der Drehzahl entspricht, wird das Programm von Figur 11 folgendermaßen durchlaufen: Das Programm startet bei einem Programmpunkt 800, bei dem das Elektrowerkzeug in Betrieb genommen wird. Der Schalter 70 befindet sich in der Position, bei der das automatische Verfahren zum Verhindern eines vollständigen Lösens der Schraube vom Werkstück aktiviert ist. Anschließend wird bei einem folgenden Programmpunkt 810 überprüft, ob sich das Elektrowerkzeug in dem Betriebsmodus Herausdrehen einer Schraube, das heißt z.B. Linksdrehung befindet. Ist dies der Fall, so wird bei einem folgenden Programmpunkt 820 ein Zähler auf den Wert Null gesetzt.

Bei Programmpunkt 800 kann zudem erfasst werden, welche Drehzahl eine Bedienperson vom Elektrowerkzeug anfordert. Beispielsweise kann eine Bedienperson eine niedrige Drehzahl und/oder einen langsamen Anstieg der Drehzahl zum Lösen der Schraube einstellen. Die Erfassung der Drehzahl kann anhand der Art der Betätigung des Triggers 18t erfasst werden. Wird der Trigger 18t vollständig bis zum Anschlag gedrückt, so wird eine maximale Drehzahl des Elektromotors von der Bedienperson gewünscht. Zudem kann zusätzlich oder anstelle der Art des teilweisen oder vollständigen Durchdrückens des Triggers 18t auch eine Geschwindigkeit der Betätigung des Triggers 18t erfasst werden und zusätzlich oder anstelle des Betätigungsweges des Triggers 18t auch die Geschwindigkeit der Betätigung des Triggers 18t bei dem folgenden automatischen Verfahren berücksichtigt werden. Die Geschwindigkeit der Betätigung des Triggers und/oder der Betätigungsweg des Triggers kann mit entsprechenden Sensoren erfasst und an die Steuerschaltung 46 geleitet werden.

Bei Programmpunkt 820 wird die Drehgeschwindigkeit des Elektromotors proportional zu dem Betätigungsweg des Triggers 18t eingestellt. Wird der Trigger 18t nur halb eingedrückt, so wird der Elektromotor von der Steuerschaltung nur mit der halben der maximal möglichen Drehzahl angesteuert. Wird der Trigger vollständig eingedrückt, so steuert die Steuerschaltung den Elektromotor mit maximal möglicher Drehzahl an. Entsprechend kann auch die Geschwindigkeit der Betätigung des Triggers berücksichtigt werden.

Bei diesem Zustand wird der Programmpunkt 820 so lange beibehalten, bis der Strom über dem ersten Grenzwert I1 liegt. Anschließend wird zu Programmpunkt 840 verzweigt. Falls die Bedienperson während des Programmpunktes 840 die Drehzahl des Elektrowerkzeuges reduziert, dann fällt der Strom unter den zweiten Grenzwert I2, so dass die Abfrage bei Programmpunkt 890 ergibt, dass zu Programmpunkt 820 zurückverzweigt wird.

Somit erkennt das Programm, dass eine geringe Drehzahl und/oder ein langsamer Anstieg der Drehzahl durch die Bedienperson gewünscht werden, und dass keine Last d.h. kein Sitzmoment der Schraube vorliegt. Dies kann beispielsweise bedeuten, dass keine Wirkverbindung zwischen dem Elektrowerkzeug und einer Schraube oder einer Mutter vorliegt. Somit kann die Bedienperson die Drehung des Elektrowerkzeuges vollständig kontrollieren.

Eine sechste Betriebssituation, die einer geringen Last und einer langsamen Betätigung des Triggers 18t entspricht, wird anhand des Programmablaufes der Figur 11 folgendermaßen durchlaufen:

Das Programm startet bei einem Programmpunkt 800, bei dem das Elektrowerkzeug in Betrieb genommen wird. Der Schalter 70 befindet sich in der Position, bei der das automatische Verfahren zum Verhindern eines vollständigen Lösens der Schraube vom Werkstück aktiviert ist. Anschließend wird bei einem folgenden Programmpunkt 810 überprüft, ob sich das Elektrowerkzeug in dem Betriebsmodus Herausdrehen einer Schraube, das heißt z.B. Linksdrehung befindet. Ist dies der Fall, so wird bei einem folgenden Programmpunkt 820 ein Zähler auf den Wert Null gesetzt.

Bei Programmpunkt 800 kann zudem erfasst werden, welche Drehzahl eine Bedienperson vom Elektrowerkzeug anfordert. Beispielsweise kann eine Bedienperson ein langsames Ansteigen der Drehzahl zum Lösen der Schraube einstellen. Die Erfassung der Drehzahl kann anhand der Art der Betätigung des Triggers 18t erfasst werden. Wird der Trigger 18t langsamer als eine abgespeicherte Vergleichsgeschwindigkeit betätigt, so wird ein langsamer Anstieg der Drehzahl des Elektromotors von der Bedienperson gewünscht. Die Geschwindigkeit der Betätigung des Triggers 18t wird bei dem folgenden automatischen Verfahren berücksichtigt. Die Geschwindigkeit der Betätigung des Triggers und/oder der Betätigungsweg des Triggers kann mit entsprechenden Sensoren erfasst und an die Steuerschaltung 46 geleitet werden.

Im folgenden Programmpunkt 820 wird die Drehgeschwindigkeit des Elektromotors, d.h. die Drehzahl proportional zu dem Betätigungsweg des Triggers 18t eingestellt. Wird der Trigger 18t nur halb eingedrückt, so wird der Elektromotor von der Steuerschaltung nur mit der halben der maximal möglichen Drehzahl angesteuert. Wird der Trigger vollständig eingedrückt, so steuert die Steuerschaltung den Elektromotor mit maximal möglicher Drehzahl an. Entsprechend kann auch die Geschwindigkeit der Betätigung des Triggers berücksichtigt werden.

Anschließend wird bei einem folgenden Programmpunkt 830 überprüft, ob der Strom I des Elektromotors länger als eine vorgegebene erste Zeitdauer $t1$ höher als ein vorgegebener erster Grenzwert $I1$ ist. Die erste Zeitdauer $t1$ kann beispielsweise zwischen 0,03 und 0,1 Sekunden betragen. Ist dies der Fall, so wird anschließend zu einem folgenden Programmpunkt 840 verzweigt. Ist dies nicht der Fall, so wird weiterhin Programmpunkt 820 durchgeführt. Bei Programmpunkt 840 wird die Drehzahl des Elektromotors weiterhin abhängig von der Art der Betätigung des Triggers 18t eingestellt.

Bei einem folgenden Programmpunkt 850 wird überprüft, ob der Strom des Elektromotors über einen vorgegebenen dritten Grenzwert $I3$ ansteigt. Ist dies der Fall, so wird der Zähler um den Wert 1 auf den Wert 1 erhöht und zu einem folgenden Programmpunkt 860 verzweigt. Ist dies nicht der Fall, so wird weiterhin Programmpunkt 840 ausgeführt. Der dritte Grenzwert $I3$ entspricht dem Wert, der für die Ausführung eines Schlagmechanismus gerade noch ausreicht, wenn der Trigger 18t nur langsam, d.h. langsamer als die Vergleichsgeschwindigkeit bestätigt wird.

Verweilt das Programm länger als eine vorgegebene zweite Zeitdauer $t2$ bei Programmpunkt 840, so wird in einem Programmpunkt 890 überprüft, ob der Strom I des Elektromotors kleiner als ein vorgegebener zweiter Grenzwert $I2$ ist. Ist dies der Fall, so wird zum Programmpunkt 820 zurückverzweigt. Ist dies nicht der Fall, so wird weiterhin Programmpunkt 840 ausgeführt.

Bei Programmpunkt 860 wird die Drehzahl des Elektromotors weiterhin abhängig von der Art Betätigung des Triggers 18t von der Steuerschaltung gesteuert. Bei Programmpunkt 860 wird zudem in einem Programmpunkt 960 überprüft, ob der Zähler wenigstens den Wert 3 aufweist. Ist dies der Fall, so wird direkt zu Programmpunkt 880 verzweigt. Ist dies nicht der Fall, so verbleibt das Programm bei Programmpunkt 860.

Verweilt das Programm länger als eine vorgegebene zweite Zeitdauer $t2$ bei Programmpunkt 860, so wird bei einem Programmpunkt 870 überprüft, ob der Strom des Elektromotors größer als ein vorgegebener vierter Grenzwert $I4$ ist.

Der vierte Grenzwert $I4$ weist einen größeren Wert als bei der vierten Betriebssituation auf. Somit ergibt die Abfrage bei Programmpunkt 870, dass der Strom kleiner als der vierte Grenzwert ist. Somit wird zu Programmpunkt 840 zurückverzweigt. Zu dieser Zeit ist der Strom größer als der dritte Grenzwert $I3$, so dass gemäß dem Programmpunkt 850 wieder zu Programmpunkt 860 verzweigt wird. Zudem wird der Zähler um den Wert 1 auf den Wert 2 erhöht. Anschließend erfolgt nach der zweiten Zeitdauer $t2$ die Abfrage bei Programmpunkt 870. Die Abfrage ergibt wieder, dass der Strom kleiner als der vierte Grenzwert $I4$ ist, so dass anschließend wieder zu Programmpunkt 840 zurückverzweigt wird. Die folgende Abfrage bei Programmpunkt 850 ergibt wieder, dass der Strom größer als der dritte Grenzwert $I3$ ist, so dass der Zähler um den Wert 1 auf den Wert 3 erhöht wird und zu Programmpunkt 860 verzweigt wird.

Bei dem folgenden Programmpunkt 860 wird durch die Abfrage bei Programmpunkt 960 erkannt, dass der Wert des Zählers dem Wert 3 entspricht. Somit wird direkt zu Programmpunkt 880 verzweigt.

Der vierte Grenzwert $I4$ ist für diese Betriebssituation besonders klein zu wählen, um einen Übergang zu Programmpunkt 880 zu ermöglichen. Beispielsweise werden die Grenzwerte, insbesondere der vierte Grenzwert experimentell ermittelt und abgespeichert. Der Wert des Zählers mit dem Wert 3 bedeutet, dass eine geringe Last mit einer geringen oder langsamen Betätigung des Triggers 18t erkannt wurde. Wenn die Last niedrig ist, das heißt zum Beispiel die Schraube nicht vollständig oder nicht fest angezogen ist, dann fällt der Strom schneller ab, da die Schraube leichter gelöst werden kann. Nach Programmpunkt 880 erfolgt die Abfrage bei Programmpunkt 950, da der Zähler nicht den Wert 1 aufweist. Bei Programmpunkt 950 erfolgt die Abfrage, ob der zeitliche Abfall des Stromes kleiner ist als ein vorgegebener Vergleichswert. Der vorgegebene Vergleichswert ist z.B. als negativer zeitlicher Gradient des Stromes im Speicher abgelegt. Ergibt die Abfrage bei Programmpunkt 950, dass der gemessene zeitliche Abfall des Stromes kleiner als der Vergleichswert, so wird zu Programmpunkt 910 verzweigt. Anschließend werden die Programmpunkte 910, 920, 930 und 940 wie beschrieben ausgeführt.

Die beschriebenen Verfahren können auch auf das Herausschrauben von Schraubenbolzen oder Schraubenmuttern oder anderen geschraubten Teilen angewendet werden. Somit wird unter dem Begriff Schraube jedes Teil verstanden, das mit oder in ein Gegenstück geschraubt bzw. verschraubt werden kann.

Zudem können die beschriebenen automatischen Verfahren zum Herausdrehen einer Schraube gemäß Fig. 11 durch eine vorgegebene Eingabe der Bedienperson, beispielsweise durch eine Eingabe einer vorgegebenen Stoppzeit beendet werden.

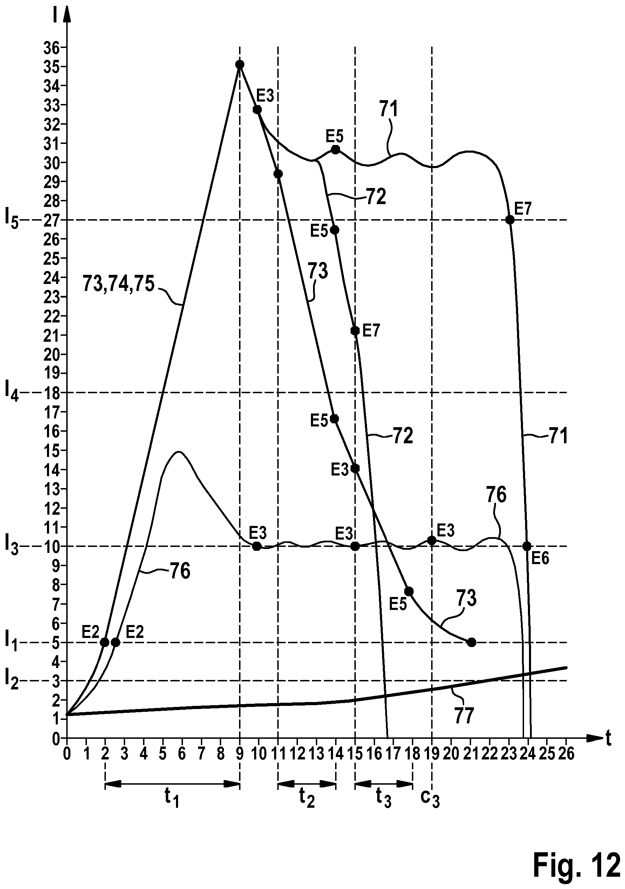

Figur 12 zeigt in einem Diagramm den Strom I über die Zeit t für verschiedene Verfahren zum automatischen Herausdrehen einer Schraube ohne die Schraube vollständig vom Werkstück zu lösen, die gemäß dem Programmablauf von Figur 11 durchgeführt werden können. Eine erste Kennlinie 73 kennzeichnet die erste Betriebssituation. Eine zweite Kennlinie 74 kennzeichnet die zweite Betriebssituation. Eine dritte Kennlinie 75 stellt eine dritte Betriebssituation dar. Die ersten drei Kennlinien 73,74,75 sind für die gewählten Ausführungsformen in einer Anfangsphase identisch ausgebildet. Eine vierte Kennlinie 76 stellt eine vierte Betriebssituation dar. Eine fünfte Kennlinie 77 stellt eine fünfte Betriebssituation dar.

Zudem sind in dem Diagramm der erste Grenzwert I1, der zweite Grenzwert I2, der dritte Grenzwert I3, der vierte Grenzwert I4 und der fünfte Grenzwert I5 eingezeichnet. Weiterhin sind Beispiele für die erste Zeitdauer t1, für die zweite Zeitdauer t2 und für die dritte Zeitdauer t3 eingezeichnet. Die erste Zeitdauer t1 kann beispielsweise zwischen 0,03 und 0,1 Sekunden betragen. Die zweite Zeitdauer t2 kann beispielsweise zwischen 0,01 Sekunden und 0,05 Sekunden liegen. Die dritte Zeitdauer t3 kann zwischen 0,01 Sekunden und 0,05 Sekunden liegen. In dem dargestellten Beispiel ist der erste Grenzwert I1 kleiner als der dritte Grenzwert I3. Der dritte Grenzwert I3 ist kleiner als der vierte Grenzwert I4. Der vierte Grenzwert I4 ist kleiner als der fünfte Grenzwert I5. Der zweite Grenzwert I2 ist kleiner als der erste Grenzwert I1.

In den Kennlinien ist mit E2 das Auftreten der Abfrage gemäß Programmpunkt 830, ob der Strom den ersten Grenzwert I1 überschreitet, dargestellt. Zudem ist mit E3 das Auftreten der Abfrage gemäß Programmpunkt 850, ob der Strom den dritten Grenzwert I3 überschreitet, eingezeichnet. Weiterhin ist mit E5 das Auftreten der Abfrage gemäß Programmpunkt 870, ob der Strom den vierten Grenzwert I4 überschreitet, dargestellt. Mit E6 ist bei der ersten Kennlinie 71 die Abfrage gemäß Programmpunkt 950 dargestellt, ob der negative zeitliche Gradient des Stromes vom Betrag größer ist als der negative zeitliche Vergleichsgradient, d.h., ob der Strom stärker abfällt als der Vergleichsgradient. Weiterhin ist mit E7 das Auftreten der Abfrage gemäß Programmpunkt 900, ob der Strom den fünften Grenzwertes I5 unterschreitet, eingezeichnet.

Die erste Betriebssituation entspricht einer Last, d.h. einem hohen Sitzmoment der Schraube und einer hohen gewünschten Drehzahl des Elektrowerkzeuges. Die zweite Betriebssituation entspricht einer niedrigen Last, d.h. einem niedrigen Sitzmoment und einer hohen gewünschten Drehzahl des Elektrowerkzeuges. Die dritte Betriebssituation entspricht keiner Last, d.h. keinem Sitzmoment und einer hohen Drehzahl des Elektrowerkzeuges. Die vierte Betriebssituation entspricht keiner wesentlichen Last, d.h. keinem wesentlichen Sitzmoment und einer geringen gewünschten Drehzahl, die beispielsweise kleiner als 60 % der maximalen Drehzahl ist. Die fünfte Betriebssituation entspricht keiner wesentlichen Last, d.h. kein wesentliches Sitzmoment und einer geringen gewünschten Drehzahl des Elektrowerkzeuges.

Wie anhand der Kennlinien zu erkennen ist, sind die Stromverläufe für die erste Betriebssituation, die zweite Betriebssituation und die dritte Betriebssituation in der Anfangsphase gleich. Im Laufe der Zeit verhalten sich die Stromverläufe für die erste, zweite und dritte Betriebssituation jedoch mit der Zeit unterschiedlich. Die Stromverläufe für die vierte und die fünfte Betriebssituation sind von Anfang an unterschiedlich.

**Patentansprüche**

1. Verfahren zum Steuern eines Elektromotors eines Elektrowerkzeuges mit einer Aufnahme für ein Werkzeug zum Herausschrauben einer Schraube von einem Gegenstück, wobei beim Herausschrauben einer Schraube der Elektromotor gestoppt wird, wenn das vom Elektromotor abgegebene Drehmoment unter einen vorgegebenen Grenzwert fällt, oder wenn die Schraube eine vorgegebene Anzahl von Umdrehungen aus einer Sitzposition herausgeschraubt wurde, wobei das Drehmoment anhand eines zeitlichen Verlaufes des Stromes ermittelt wird, der vom Elektromotor beim Herausdrehen der Schraube aufgenommen wird, und wobei die Drehzahl des Elektromotors wenigstens reduziert wird, wenn der Strom schneller als ein zeitlicher Vergleichsgradient fällt, **dadurch gekennzeichnet, dass** der Vergleichsgradient abhängig von einer durch eine Bedienperson vorgegebenen Drehzahl des Elektromotors und/oder abhängig von einer Geschwindigkeit einer Betätigung eines Schalters zum Vorgeben der Drehzahl verschiedene Werte annehmen kann.

2. Verfahren nach Anspruch 1, wobei der Grenzwert und/oder die Anzahl der Umdrehungen von einer Bedienperson festgelegt werden.

3. Verfahren nach Anspruch 1 oder 2, wobei das abgegebene Drehmoment anhand eines Stromes erfasst wird, der vom Elektromotor aufgenommen wird, und wobei die Drehzahl des Elektromotors wenigstens reduziert wird, wenn der Strom unter einen Grenzwert fällt.

4. Verfahren nach einem der vorhergehenden Ansprüche, wobei der Grenzwert und/oder der Vergleichsgradient abhängig von einem Sitzmoment der Schraube festgelegt werden.

5. Verfahren nach Anspruch 4, wobei das Sitzmoment der Schraube anhand eines Stromes abgeschätzt wird, der vom Elektromotor insbesondere in einer Anfangsphase bei Herausdrehen der Schraube aufgenommen wird.

6. Verfahren nach einem der vorhergehenden Ansprüche, wobei eine Batteriespannung überprüft wird, mit der der Elektromotor angetrieben wird, wobei ein Hinweis ausgegeben wird, wenn die Batteriespannung unter einem vorgegebenen Mindestwert liegt.

**Claims**

1. Method for controlling an electric motor of a power tool with a holder for a tool for unscrewing a screw from a mating piece, wherein, during unscrewing of a screw, the electric motor is stopped when the torque emitted by the electric motor falls below a prespecified limit value or when the screw has been unscrewed out of a seated position for a prespecified number of revolutions, wherein the torque is determined on the basis of a time profile of the current which is drawn by the electric motor when unscrewing the screw, and wherein the rotation speed of the electric motor is at least reduced when the current falls more rapidly than a time-based comparison gradient, **characterized in that** the comparison gradient can assume different values depending on a rotation speed of the electric motor prespecified by an operator and/or depending on a speed of an operation of a switch for prespecifying the rotation speed.

2. Method according to Claim 1, wherein the limit value and/or the number of revolutions are/is defined by an operator.

3. Method according to Claim 1 or 2, wherein the emitted torque is detected on the basis of a current which is drawn by the electric motor, and wherein the rotation speed of the electric motor is at least reduced when the current falls below a limit value.

4. Method according to one of the preceding claims, wherein the limit value and/or the comparison gradient are/is defined depending on a seating moment of the screw.

5. Method according to Claim 4, wherein the seating moment of the screw is estimated on the basis of a current which is drawn by the electric motor, in particular in a starting phase when unscrewing the screw.

6. Method according to one of the preceding claims, wherein a battery voltage with which the electric motor is driven is checked, wherein a message is output when the battery voltage lies below a prespecified minimum value.

**Revendications**

1. Procédé de commande d'un moteur électrique d'un outil électrique pourvu d'un logement destiné à un outil de dévissage d'une vis d'une contre-pièce, le moteur électrique étant arrêté lors du dévissage d'une vis si le couple fourni par le moteur électrique tombe au-dessous d'une valeur limite spécifiée, ou si la vis a été dévissée d'une position de fixation d'un nombre de tours spécifié, le couple étant déterminé sur la base d'une variation dans le temps du courant qui est absorbé par le moteur électrique lors du dévissage de la vis, et la vitesse de rotation du moteur électrique étant au moins réduite lorsque le courant chute plus rapidement qu'un gradient de comparaison temporel, **caractérisé en ce que** le gradient de comparaison peut prendre différentes valeurs en fonction d'une vitesse de rotation du moteur électrique spécifiée par un opérateur et/ou en fonction d'une vitesse d'actionnement d'un interrupteur pour spécifier la vitesse de rotation.

2. Procédé selon la revendication 1, la valeur limite et/ou le nombre de tours étant déterminés par un opérateur.

3. Procédé selon la revendication 1 ou 2, le couple délivré étant détecté sur la base d'un courant qui est absorbé par le moteur électrique, et la vitesse de rotation du moteur électrique étant au moins réduite lorsque le courant tombe au-dessous d'une valeur limite.

4. Procédé selon l'une des revendications précédentes, la valeur limite et/ou le gradient de comparaison étant déterminés en fonction d'un couple de fixation de la vis.

5. Procédé selon la revendication 4, le couple de fixation de la vis étant estimé à partir d'un courant absorbé par le moteur électrique, notamment dans une phase initiale lors du dévissage de la vis.

6. Procédé selon l'une des revendications précédentes, une tension de batterie étant vérifiée avec laquelle le moteur électrique est entraîné, une indication étant délivrée si la tension de la batterie est inférieure à une valeur minimale spécifiée.

Fig. 1

Fig. 2

Fig. 3

400

410

420

430

440

450

460

Fig. 4

**Fig. 5**

Fig. 6

700

710

720

730

**Fig. 7**

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2599589 A1

- WO 2011122361 A1